# EUROPEAN PATENT SPECIFICATION

(11) **EP 2 335 105 B1**
(45) Date of publication and mention of the grant of the patent: **04.08.2021**
(21) Application number: 09793180.2
(22) Date of filing: 30.09.2009
(51) Int. Cl.: G02B 6/38

(54) **FIBER OPTIC CABLE ASSEMBLIES AND SECURING METHODS**
GLASFASERKABELANORDNUNGEN UND BEFESTIGUNSGVERFAHREN
ENSEMBLES CÂBLE À FIBRE OPTIQUE ET PROCÉDÉS DE FIXATION

(30) Priority: 30.09.2008 US 241375; 30.09.2008 US 241346; 19.01.2009 US 355907
(43) Date of publication of application: 22.06.2011
(73) Proprietor: Corning Optical Communications LLC, Charlotte, NC 28216 (US)
(72) Inventor: COLEMAN, Casey A., Lincolnton NC 28092 (US); THEUERKORN, Thomas, Hickory North Carolina 28601 (US)
(74) Representative: Sturm, Christoph
(86) International application number: PCT/US2009/059025
(87) International publication number: WO 2010/039830

(56) References cited:
- DE-A1- 4 303 737
- JP-A- 56 089 709
- JP-A- H08 304 675
- US-A- 4 880 290
- US-A1- 2006 269 194
- US-A1- 2008 193 089

## Description

### BACKGROUND

### Field

The disclosure is directed to an assembly of a fibre cable with strength members and a retention body. A buckling chamber is included and configured to store any excess optical fiber, such as due to retraction of an optical ferrule.

### Technical Background

Optical fiber is increasingly being used for a variety of applications, including but not limited to broadband voice, video, and data transmission. Benefits of optical fiber use include extremely wide bandwidth and low noise operation. With the increasing and varied use of optical fibers, it is important to provide efficient methods of interconnecting optical fibers. Fiber optic connectors have been developed for this purpose. It is important that fiber optic connectors not significantly attenuate or alter the transmitted signal. In addition, the fiber optic connector should be relatively rugged and adapted to be connected and disconnected a number of times in order to accommodate changes in the optical fiber transmission path. Because of the skill required in making optical fiber connections, fiber optic cables for fiber to the subscriber and/or other applications are typically preconnectorized with fiber optic connectors by the manufacturer for plug and play connectivity.

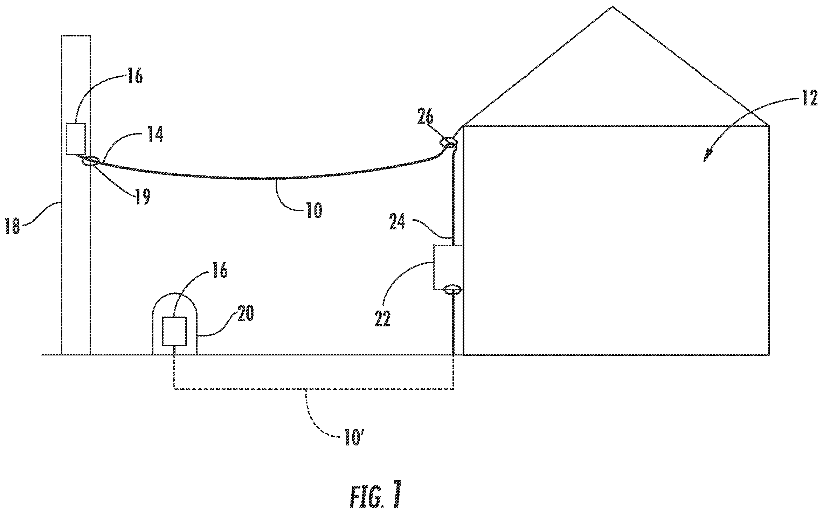

**FIG. 1** schematically illustrates two different typical installations for preconnectorized fiber optic cables **10** and **10'** being routed to a subscriber. Specifically, **FIG. 1** shows a first preconnectorized fiber optic cable **10** being routed to a premises **12** in an aerial installation. A second preconnectorized fiber optic cable **10'** is routed to the premises **12** in a buried installation. In the aerial installation, a first end **14** of the preconnectorized fiber optic cable **10** is attached at a first interface device **16** located at, or near, a pole **18.** A second end **24** of the preconnectorized fiber optic cable **10** is attached at a second interface device **22** located at the premises **12.** By way of example, the first interface device **16** may be a closure, multiport (a device having multiple receptacles), or the like. The second interface device **22** may be a closure, network interface device (NID), optical network terminal (ONT), or the like. In the aerial installation, the craft typically uses a pressure clamp **26** (i.e., a p-clamp), as schematically shown in **FIG. 1****,** for securing the preconnectorized fiber optic cable **10** under tension at, or near, pole **18** and/or premises **12,** thereby avoiding undue sag in preconnectorized the fiber optic cable **10** along the aerial span. In the buried application, the first and second ends of preconnectorized cable **10'** are respectively connected to the interface device **16** located inside a pedestal, a vault, or like **20** and interface device **22.**

Termination of fiber optic cables with a simple, reliable, and easy to assemble hardened connector for fiber to the subscriber applications as depicted in **FIG.** 1 is challenging for many reasons. For instance, the termination should seal to inhibit the ingress of moisture, withstand rugged handling by the craft and endure environmental effects. One test to determine ruggedness of the termination is a pull-out test. The pull-out test measures the force required for mechanical failure by separating the fiber optic cable from the hardened connector when pulling on the fiber optic cable when the connector is fixed. Typical hardened connectors strain relieved the strength members by totally exposing the strength elements from the fiber optic cable and then strain relieving the same with the hardened connector. Illustratively, one commercially successful hardened connector termination is disclosed in U.S. Pat. No. 7,090,407. The disclosed design of the '407 patent can handle different types of fiber optic cables, but the preparation of the fiber optic cables requires totally exposing the strength elements from the fiber optic cable.

Totally exposing the strength elements from some fiber optic cables for termination is easy if there is little to no bond of the strength element with the cable jacket. However, many fiber optic cables used for outdoor applications have a high-degree of bonding between the strength element and the cable jacket. Thereby making total exposure of the strength elements for termination difficult and/or time consuming. Thus, there is an unresolved a need for a robust fiber optic cable termination that is simple, reliable, and easy to assemble.

Fiber optic cable assemblies according to the prior art are disclosed by the documents US 2006/0269194 A1, US 4880290 A, US 2008/0193089 A1, JP S56 089709 A and DE 43 03 737 A1.

JPH08304675 discloses a fiber optic cable having an end portion, the end portion including at least a portion of one strength component and a portion of a cable jacket, wherein the at least one strength component is exposed at the front face of end portion by cutting the cable at the front surface perpendicular to the longitudinal axes of the strength component.

### SUMMARY

The invention provides a fiber optic cable assembly according to claim 1 a method for of assembling a fiber optic cable assembly according to claim 7.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure. The drawings illustrate various embodiments and together with the description serve to explain the principles and operation.

### BRIEF DESCRIPTION OF THE FIGURES

**FIG. 1** is a schematic illustration of the drop link portion of an optical network being routed to a premises using different installations techniques;
**FIGS. 2A and 2B** are perspective views of an explanatory fiber optic cable having an end portion with features prepared in accordance with one embodiment;
**FIGS. 2C and 2D** are side and top views, respectively, of the fiber optic cable illustrated in **FIGS. 2A and 2B****;**
**FIGS. 2E and 2F** are perspective views of other explanatory fiber optic cables having an end portion not according to the invention;
**FIG. 3** is a cross-sectional view of the fiber optic cable illustrated in **FIGS. 2A and 2B****;**
**FIGS. 4A-4C** illustrate exemplary steps for preparing the end portion of the fiber optic cable illustrated in **FIGS. 2A and 2B****;**
**FIG. 4D** depicts an initial processing step that may be used before preparing the end portion of the fiber optic cable for addressing undersized/oversized fiber optic cables not according to the invention;
**FIGS. 5A and 5B** illustrate a fiber optic cable assembly with the prepared fiber optic cable of **FIGS. 2A and 2B** inserted into a retention body;
**FIGS. 6A and 6B** are perspective views of the retention body of **FIGS. 5A and 5B****;**
**FIGS. 6C and 6D** respectively illustrate a cross-sectional view and a front view of the retention body of **FIGS. 6A and 6B****;**
**FIGS. 7A and 7B** respectively illustrate a rear perspective view of an alternative retention body and a partial cross-sectional view of an assembly using the same;
**FIG. 7C** depicts a cross-sectional view of another retention body having connector mating geometry integrated therewith;
**FIG. 8** is a quarter-sectional view of the fiber optic cable assembly of **FIGS. 5A and 5B** showing the end portion of the fiber optic cable disposed within the retention body;
**FIG. 9** is a close-up quarter-sectional view of the fiber optic cable assembly of **FIGS. 5A and 5B** illustrating the cable jacket and at least one partially exposed strength component disposed within the retention body;
**FIGS. 10A and 10B** respectively illustrate a plan view and a cross-sectional view of the fiber optic cable assembly of **FIG. 5B****,** which schematically illustrates the flow path for the bonding agent;
**FIG. 11** is a quarter-sectional view of the fiber optic cable assembly of **FIGS. 5A and 5B** illustrating the optical fiber extending through a buckling chamber of the retention body and into a connector sub-assembly;
**FIGS. 12A** **and** **12B** respectively illustrate a partially exploded, partial sectional view along with an assembled side view of the fiber optic cable assembly of **FIGS. 5A and 5B** provided as part of a hardened fiber optic connector;
**FIGS. 13A and 13B** are perspective views of the retention body of **FIGS. 6A and 6B** illustrating alternate methods for securing the fiber optic cable using mechanical elements;
**FIG. 14** is a cross-sectional view of an alternate fiber optic cable including a buffer tube that may be employed in the fiber optic cable assembly;
**FIG. 15** is a cross-sectional view of another alternate fiber optic cable that may be employed in the fiber optic cable assembly;
**FIG. 16** is a cross-sectional view of still another multi-fiber optic cable that may be employed;
**FIG. 17** is a perspective view of another explanatory fiber optic cable having an end portion prepared for insertion to the retention body not according to the invention;
**FIGS. 18 and 19** are perspective views of another explanatory retention body suitable for securing the fiber optic cable of **FIG. 17****;**
**FIGS. 20 and 21** are respective cross-sectional views of the retention body shown in **FIGS. 18 and 19** with the fiber optic cable of **FIG. 17** secured thereto;
**FIGS. 22 and 23** are respective transverse cross-sectional view taken along lines 22-22 and lines 23-23 figure 20 showing the fiber optic cable within the retention body;
**FIG. 24** is a quarter-sectional view of the fiber optic cable assembly showing the end portion of the fiber optic cable of **FIG. 17** disposed within the retention body of **FIGS. 18 and 19****;**
**FIG. 25** depicts a sectional view of another suitable cap for the connector assembly;
**FIG. 26** is an exploded perspective view of another fiber optic cable assembly; and
**FIG. 27** is a perspective view of an assembled fiber optic cable assembly having a fiber optic cable with a toning lobe that has been peeled back for attaching the retention member and assembling the connector.

### DETAILED DESCRIPTION OF THE PREFERRED EMBODIMENTS

Reference will now be made in detail to the preferred embodiments of the disclosure, examples of which are illustrated in the accompanying drawings. Whenever possible, like reference numbers will be used to refer to like components or parts.

The embodiments described herein include fiber optic cable assemblies and related components, securing methods, and fiber optic cable preparation methods for securing a fiber optic cable to a retention body or the like, which may further form a fiber optic connector (i.e., termination of the fiber optic cable with a fiber optic connector). Disclosed methods and terminations prepare an end portion of a fiber optic cable for insertion into a retention body of a hardened fiber optic connector. Moreover, the concepts of the disclosure advantageously strain-relieve the end portion of the fiber optic cable without requiring totally exposing the strength components of the fiber optic cable while still providing a robust termination. Reference will now be made in detail to the preferred embodiments, examples of which are illustrated in the accompanying drawings. Whenever possible, like reference numbers will be used to refer to like components or parts.

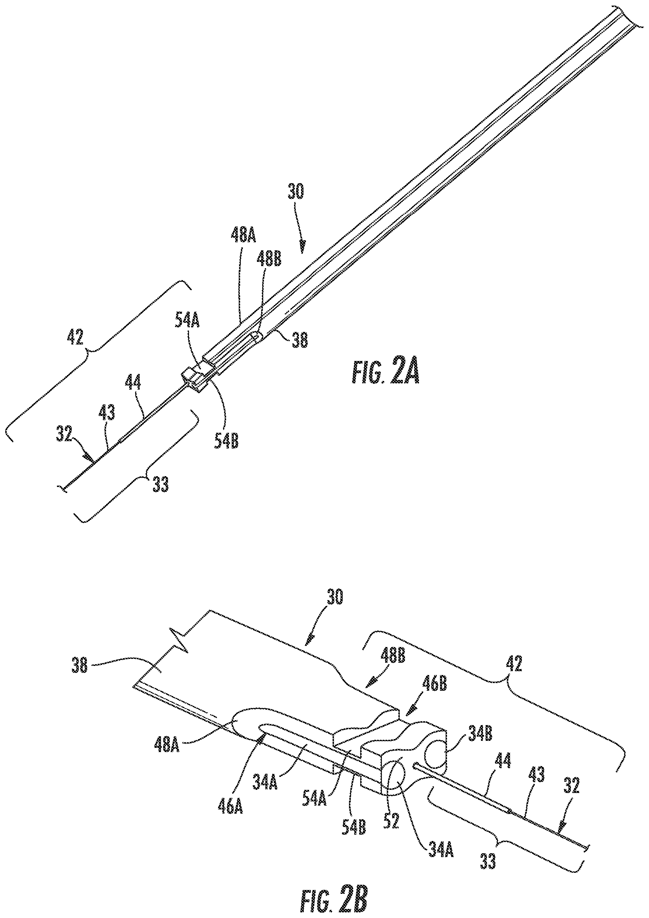

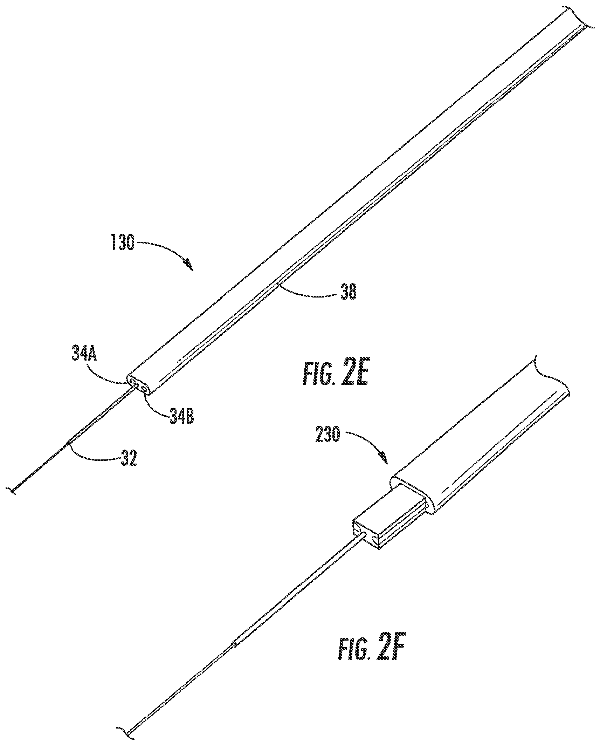

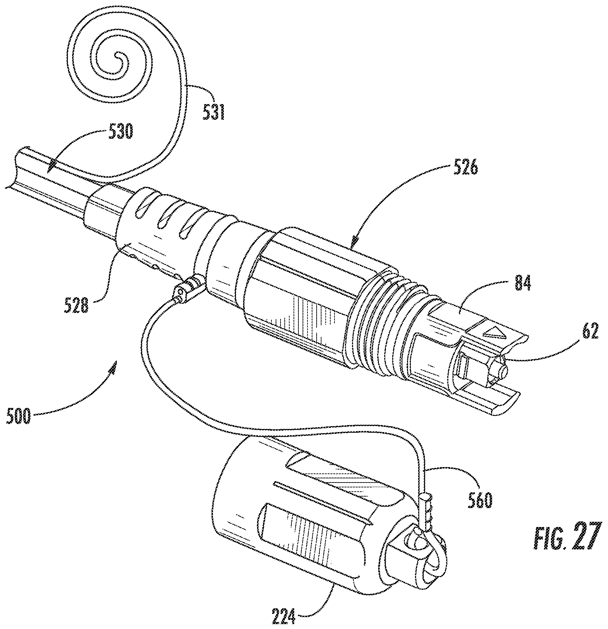

**FIGS. 2A-2D** illustrate various views of an explanatory fiber optic cable **30** and preparation features having a portion of at least one strength component partially exposed for bonding while still being secured to a cable jacket of the fiber optic cable. Thus, the strength components of the fiber optic cable are prepared for attachment, without fully stripping, i.e., without totally exposing a portion of the strength component from the cable jacket. This allows a reliable and quick method for securing the fiber optic cable with a suitable pull-out strength, while maintaining the dimensional relationship between strength component(s) and the cable jacket when the fiber optic cable is stressed. For example, the fiber optic cable assembly may have a pull-out force requirement of 100 pounds or more. Although, fiber optic cable **30** is discussed in detail herein, the concepts of the invention may use any suitable type and/or construction of fiber optic cable. Illustratively, **FIG. 2E** depicts a fiber optic cable **130** not in accordance with the invention. Although fiber optic cables with flat cross-sections are shown the concepts of the invention may be used with cables having other cross-sectional shapes such as round, figure-eight, dogbone shaped or the like. For instance, the concepts disclose herein may be used with fiber optic cables having a toning element and/or toning lobe where the toning element may be separated from the body of the cable before the end portion of the cable prepared as shown in **FIG. 27****.**

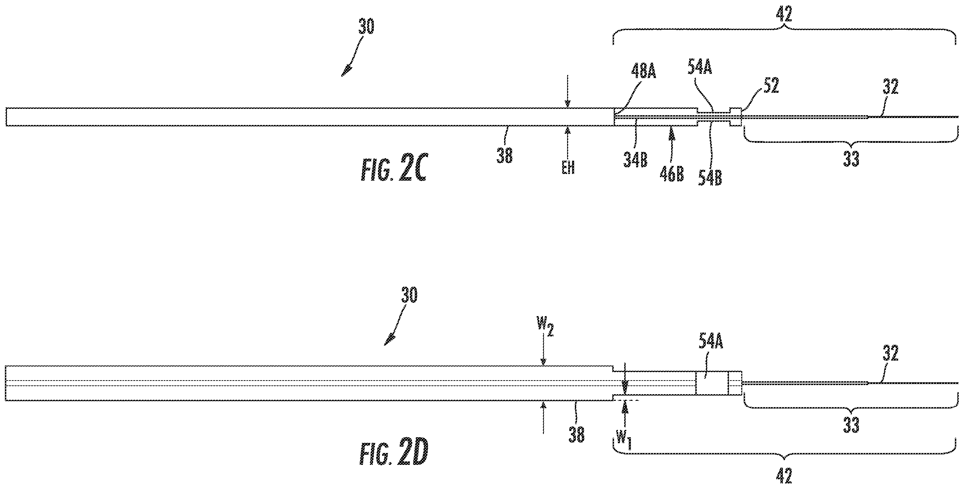

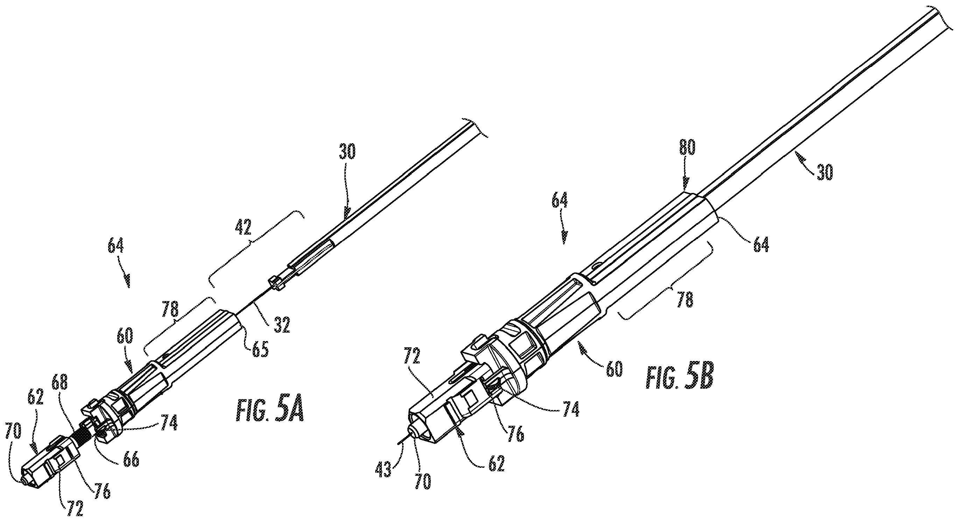

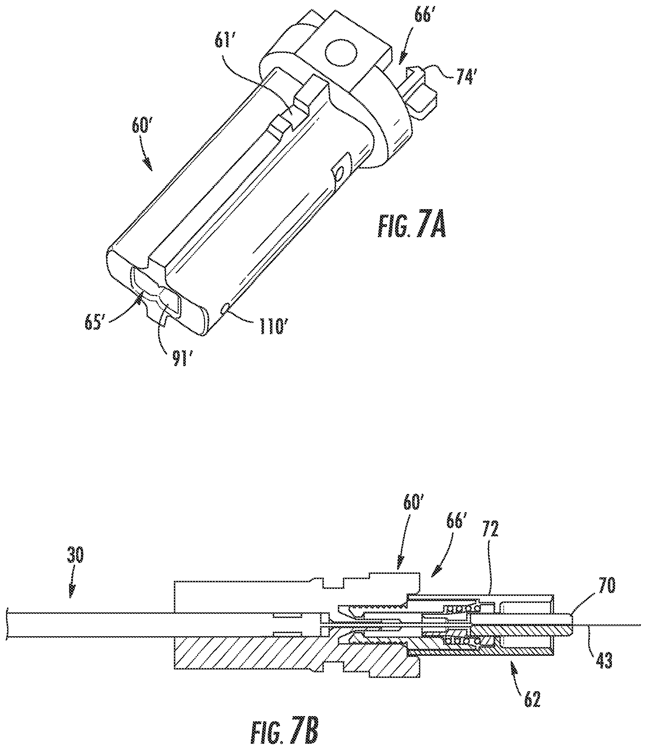

**FIGS. 2A and 2B** illustrate perspective views of fiber optic cable **30** having an end portion **42** prepared for securing to a component of a fiber optic connector. Fiber optic cable **30** includes at least one optical fiber **32,** first and second strength components **34A, 34B,** and a cable jacket **38.** As shown a portion of first and second strength component **34A, 34B** are at least partially exposed from cable jacket **38** as defined below. **FIGS. 2C and 2D** respectively depict side and top views of the end portion **42** of fiber optic cable **30.** End portion **42** of fiber optic cable **30** includes preparation features for securing it with a suitable component such as the retention body illustrated in **FIGS. 5A and 5B** or **FIG. 7A** using a bonding agent, mechanical elements, or the like. One preparation feature includes partially exposing a portion of one or more strength components. As used herein, "partially exposing" or "partially exposed" means removing a portion of the cable jacket so that a portion of the strength component is revealed while a remaining portion of the strength component along a similar longitudinal location remains attached (i.e., at the other side of the strength component) to the cable jacket. Additionally, **FIGS. 2A and 2B** also reveal that a portion of first and second strength components **34A, 34B** are shaved for increasing the surface area for bonding. In other words, a portion of the strength components are shaved without an excessive loss in tensile strength, thereby creating a larger surface area (i.e., a planar surface instead of a line surface for the partially exposed strength components). Preparation of end portion **42** also includes exposing a portion **33** of optical fiber **32** from cable jacket **38.**

In addition to creating more surface area for bonding, shaving a portion of the strength component can have other advantages. For instance, removing a portion of the strength component also removes any coating and/or disturbs the surface tension of strength component, thereby allowing wicking of a bonding agent into the strength component for improved bonding. However, this may not be necessary if the strength component does not have a coating and/or is formed from a material that naturally wicks. By way of example and not according to the invention, a textured glass-reinforced polymer (GRP) may naturally wick and may not require shaving a portion of the strength component to achieve the desired robustness.

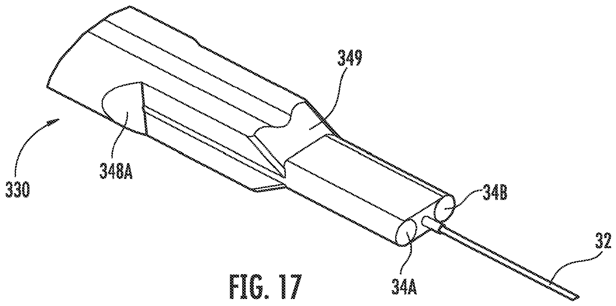

Still other examples not according to the invention are possible that do not require partially exposing the strength components at the end portion of the cable. For instance, **FIG. 2E** depicts a fiber optic cable **130** prepared for insertion into a retention member or other suitable component. In other words, the retention body or other suitable component is secured to the cable jacket of fiber optic cable **130,** instead of being secured to a portion of the strength component(s). Fiber optic cable **130** should have a suitable bond strength between the strength components and the cable jacket to transfer forces from the cable jacket to the strength component(s). Additionally, the cable jacket material should have a suitable rigidity for supporting the desired bond characteristic. **FIG. 2F** depicts another fiber optic cable **230** prepared for insertion into a retention member or other suitable component not according to the invention. Fiber optic cable **230** has more than two sides shaved for partially exposing strength components **34A, 34B.** Specifically, fiber optic cable **230** has a portion of the cable jacket removed on all four sides all the way to the front surface, thereby creating a uniform cross-section to the front surface unlike fiber optic cable **30.** Yet other variations for stripping fiber optic cables for insertion into a retention body are possible such as depicted in **FIG.** 17, not according to the invention.

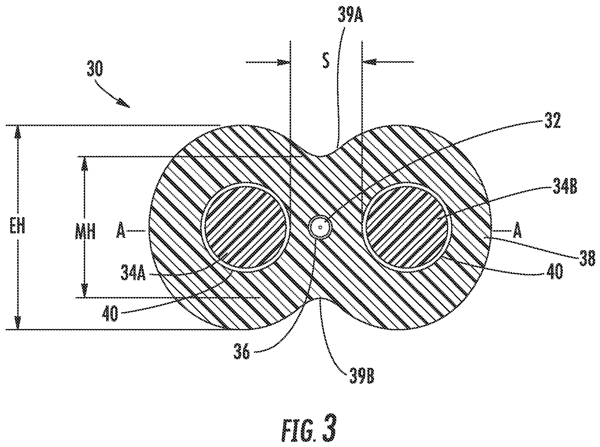

**FIG. 3** illustrates a cross-sectional view of fiber optic cable **30** of **FIGS. 2A-****2D** before preparation. If desired, optical fiber **32** may include an upcoating **36** for improving the handability by the craft and/or robustness. By way of example, upcoating **36** can be any suitable material, such as a UV-curable or polymer upcoating disposed on optical fiber **32.** Upcoating **36** may take the optical fiber **32** to 500 micrometers (µm) in diameter or other desired size like 900 micrometers (µm) for example, but other sizes are possible like 700 micrometers (µm). In this fiber optic cable embodiment, the first and second strength components **34A, 34B** are disposed (i.e., embedded) within the cable jacket **38** on opposite sides of optical fiber **32** and generally aligned along a common plane A-A, thereby providing a preferential bend characteristic to fiber optic cable **30.** Generally speaking, the strength components **34A, 34B** are much larger in size than the optical fiber **32** and are selected to provide the desired tensile strength requirements for the fiber optic cable **30.** By way of example, the first and second strength components **34A, 34B** are dielectric members, such as glass-reinforced plastic (GRPs), having a diameter of about 1.25 millimeters for example, but other sizes, shapes, and/or materials are possible for the strength components.

Fiber optic cable **30** is advantageous, because it has a relatively small cross-sectional footprint compared with conventional fiber optic drop cables used for fiber to the subscriber, or node, applications, thereby providing a relatively large slack storage capacity for excess length while still being robust. However, in order to provide a robust design with the small cross-sectional footprint specific design characteristics are required for fiber optic cable **30.** For instance, to promote bonding with the cable jacket **38,** the first and second strength components **34A, 34B** typically include one or more adhesion promoters **40** thereon, such as selected from the ethylene-acrylic family such as an ethylene-acrylic acid (EAA), but other materials or mechanisms are possible for adhesion. The adhesion promoter allows for the transfer of forces from the cable jacket to the strength components without peeling off the cable jacket such as when installed within a pressure-clamp. However, this bonding can make conventional cable preparation techniques for connectorization much more difficult. As shown, fiber optic cable **30** has a generally dog-bone cross-section due to the smaller medial height **MH** formed by indentations **39A, 39B** disposed above and below optical fiber **32.** This dog-bone cross-section allows for improved crush performance in a pressure clamp. In other words, the cable jacket **38** has a medial height **MH** disposed about the optical fiber **32** that is less than an end height **EH** of the fiber optic cable **30** for inhibiting the transfer of crushing forces to the optical fiber **32** when fiber optic cable is disposed within a pressure clamp or the like. Additionally, first and second strength components **34A, 34B** have a spacing **S** therebetween which can affect the level of stress experienced by optical fiber during crushing or the like. Fiber optic cable **30** discussed herein is also disclosed in copending U.S. Patent Application Serial No. 11/986,705 entitled "FIBER OPTIC CABLES AND ASSEMBLIES FOR FIBER TOWARD THE SUBSCRIBER APPLICATIONS" assigned to the same assignee as the present application.

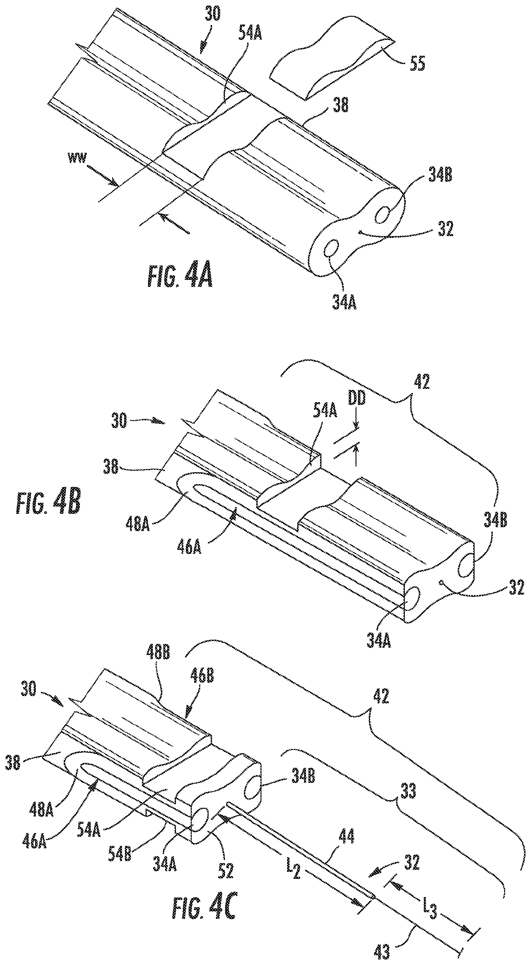

Fiber optic cables require preparing their end portions prior to connectorization. By way of example, **FIGS. 4A-4C** depict explanatory steps for preparing end portion **42** of fiber optic cable **30** shown in **FIGS. 2A-2D****.** Additionally, it is possible to perform the steps shown in **FIGS. 4A-4C** in any suitable order, multiple steps, and/or a single step. **FIG. 4A** illustrates a step of forming one or more cross-flow channels **54A, 54B** in cable jacket **38.** As illustrated in **FIG. 4A****,** a portion **55** of the cable jacket **38** is removed, thereby forming cross-flow channel **54A.** As depicted, another portion of cable jacket **38** is removed from the other side of fiber optic cable **30,** thereby forming a second cross-flow channel **54B** (not visible). Although, cross-flow channels **54A, 54B** are depicted generally perpendicular to the longitudinal axes **45A, 45B** of the strength components **34A, 34B,** they can have other suitable angles besides generally perpendicular. Cross-flow channels **54A, 54B** are preferably formed so that the partially exposed portions **46A, 46B** of the strength components **34A, 34B** are in communication with each other across the cross-flow channel. Thus, when end portion **42** of the fiber optic cable **30** is inserted into the retention body, one or more bonding chambers are formed within the space between the retention body and the fiber optic cable.

Consequently, a bonding agent injected into one bonding chamber adjacent the first strength component **34A** can flow into and through the cross-flow channels **54A, 54B** to the other bonding chamber adjacent the second strength component **34B,** or vice versa. Providing one or more cross-flow channels is advantageous since it provides a pathway for a bonding agent to flow from one bonding chamber to another bonding chamber more quickly and aids with even distribution and/or filling the bonding chambers. Cross-flow channels **54A, 54B** may have a suitable depth dimension **DD** and/or a width dimension **WW** as long as it does not compromise the integrity of the optical fiber, the strength components, and/or the termination. In one embodiment, the depth dimension **DD** of cross-flow channels **54A, 54B** are about 1 millimeter to partially expose a portion of the strength component and the width dimension **WW** is about 5 millimeters (mm). In another variation, two 2 millimeter cross-flow channels are formed on each side of fiber optic cable **30.** Of course, other embodiments can use a single cross-flow channel **54** or eliminate the cross-flow channel altogether. Additionally, with a suitable fiber optic cable design it is possible to partially expose the strength component on the top and bottom (i.e., cross-cut channels) without partially exposing the strength component on one or more sides of the fiber optic cable as discussed below.

**FIG. 4B** depicts a step of partially exposing one or more strength components **34A, 34B** of fiber optic cable **30** so the retention body can be secured thereto. As shown, a portion of cable jacket **38** is removed on opposing sides of the end portion **42** adjacent the front surface and along the longitudinal axes of strength components **34A, 34B,** thereby forming one or more partially exposed portions **46A,46B** of strength components **34A, 34B.** As depicted, a portion of strength components **34A, 34B** is removed during this step, thereby partially exposing more surface area (i.e., a larger surface area) of the strength components for bonding purposes. **FIG. 2D** shows that partially exposed portions **46A,46B** are formed by removing portions with a width **W₁** on both sides of fiber optic cable **30**. Partially exposed portions **46A, 46B** allow bonding of the strength components **34A, 34B** (and/or cable jacket **38**) with the retention body. By way of example, the length of the cable jacket **38** removed and/or strength component shaved to form partially exposed portions **46A, 46B** may be any suitable length. Additionally, a portion of the strength components **34A,34B** remain bonded with cable jacket **38,** thereby allowing the components to strain together. Preferably, the surface area of partially exposed portions **46A, 46B** are about five percent (5%) or more of the surface area per length of the cylindrical surface area of the unaltered strength component to promote bonding, more preferably, partially exposed portions **46A, 46B** are between about ten percent (10%) to about eighty (80%) percent or more to promote bonding.

Cable jacket **38** may be cut, shaved, or otherwise removed to form partially exposed portions **46A, 46B** of the strength components **34A, 34B.** If cutting or shaving is employed, the cable jacket **38** and a portion of the strength components **34A, 34B** are cut or shaved across the cable jacket **38** and a cross-sectional plane of the strength components **34A, 34B,** thereby forming a surface such as a substantially flat surface having partially exposed portions **46A, 46B** of the strength components **34A, 34B** surrounded on each side by cable jacket **38.** Any method of removing, cutting, or shaving cable jacket and strength components are possible for partially exposing at least a portion of one or both of the strength components **34A, 34B** from the cable jacket **38** while a portion of one or both of the strength components **34A, 34B** remains secured to cable jacket **38.**

Not only do partially exposed portions **46A, 46B** of the strength components **34A, 34B** allow direct bonding to the strength components **34A, 34B** while remaining secured to the cable jacket **38,** but the removal of portion of the cable jacket **38** to form partially exposed portions **46A, 46B** form cavities (i.e., chambers) when the end portion **42** of the fiber optic cable **30** is inserted into a passage of the retention body, or the like, designed to accept the geometry of fiber optic cable **30.** These cavities form one or more bonding chambers that allow for a bonding agent, such as an epoxy or the like, to be injected into the space. Simply stated, the bonding agent bonds one or both of the partially exposed portions **46A, 46B** of strength components **34A, 34B** to one or more internal surfaces of the retention body for securing fiber optic cable **30** with the retention body. The length of the partially exposed portions **46A, 46B** is based on design criteria such as the desired bond strength, the overall length of the retention body or connector and the like. Illustratively, in one embodiment the length of the partially exposed portions **46A, 46B** may be about 20 millimeters (mm); however, any suitable length of partially exposed portion is possible.

Additionally, this partially exposing step also forms other beneficial geometry. For instance, back sealing locations **48A, 48B** may also be formed as a result of removing, cutting, and/or shaving cable jacket **38** to form partially exposed portions **46A, 46B** of strength components **34A, 34B.** Back sealing locations **48A, 48B** may provide locations for abutting against an internal structure of a passage of the retention body, or other suitable component, thereby closing off the passage at the rear end when the fiber optic cable is fully seated therein. As shown, back sealing locations **48A, 48B** are formed as the cutaway transitions to the outer surface of cable jacket **38** and can have any suitable shape. In other words, back sealing locations **48A, 48B** may serve to close off the rear portions of the bonding chamber(s) so that the bonding agent is inhibited from escaping when the end portion **42** of the fiber optic cable **30** is fully inserted into the retention body. Back sealing locations **48A, 48B** may have any suitable geometry such as being disposed perpendicular to the longitudinal axes of the strength components **34A, 34B.** Simply stated, the geometry is configured to mate with an internal structure of the intended retention body, or other suitable component having complimentary geometry. Width **W₁ (****FIG. 2D****)** of the back sealing locations **48A, 48B** extend from an outside edge of the cable jacket **38** to an outside edge of strength components **34A, 34B.** For this embodiment, width **W₁** is between about 700 microns (0.7 millimeters) and about 1000 microns, but other widths and/or geometries are possible for creating back sealing locations depending on the fiber optic cable/retention body configuration. Other embodiments such as fiber optic cable **130** may use an interference fit between the unaltered (i.e., uncut) cable jacket and the passage of the retention body as the back sealing location.

**FIG. 4C** depicts another step for preparing the end portion **42** of fiber optic cable **30.** Specifically, the step of **FIG. 4C** exposes the desired amount of optical fiber **32** at the end of the fiber optic cable **30** by severing the strength components **34A,34B** and cable jacket **38** and removing a portion of the cable jacket **38** from optical fiber **32.** Additionally, this step forms a front surface **52.** Thus, the desired length of optical fiber **32** is exposed for inserting into a ferrule for connectorization. Preferably, the portion of the cable jacket **38** and strength components **34A, 34B** removed are cut or trimmed along a plane that is generally perpendicular to the longitudinal axis of the fiber optic cable, but other angles are possible. Consequently, the exposed portion **33** of optical fiber **32** extends beyond cable jacket **38** to the desired length as shown. More specifically, a bare portion **43** (i.e., core and cladding of the optical fiber) and coated portion **44** (i.e., core, cladding, fiber coating, and an optional buffer layer or cable jacket) of the optical fiber **32** are exposed. Generally speaking, this step may employ a mechanical and/or thermal method for stripping the fiber coating and/or the cable jacket as known in the art. In other embodiments, optical fiber **32** may have a thin portion of cable jacket **38** disposed thereon that extends beyond front surface **52.**

By way of example, the total length of exposed portion **33** of optical fiber **32** is between about 20 millimeters and 40 millimeters, which is the sum of a length **L₂** and a length **L₃** as illustrated in **FIG. 4C****.** Of course, other suitable lengths are possible depending the retention body/fiber optic cable configuration. Thereafter, a portion of the optical fiber coating is removed from the optical fiber **32** to expose the bare portion **43** of the same (i.e., length **L₃**) for extending into a ferrule. For instance, the coated portion **44** of the optical fiber is exposed to a length of about 20 millimeters, illustrated as length **L₂**, and the bare portion **43** is about 20 millimeters, as illustrated by length **L₃**. Thereafter, bare portion **43** of optical fiber **32** can be inserted and extended through the ferrule of the optical connector for cleaving and polishing of the ferrule end face in subsequent operations. As shown, the coating is left on coated portion **44** of optical fiber **32** for handling and stability when inserting the bare portion **43** of the optical fiber **32** into the ferrule during assembly.

Like the back sealing locations **48A, 48B,** front surface **52** is formed when a portion of the cable jacket **38** and/or strength components **34A, 34B** are removed from the end portion **42** of fiber optic cable **30.** As will be described later in this application, the front surface **52** is configured to abut against an internal surface of the retention body or the like. Simply stated, front surface **52** closes off the front ends of the bonding chambers when the end portion **42** of fiber optic cable **30** is fully inserted into the retention body. In this embodiment, the height of cable jacket **38** is not uniform across its width, thus, the height of the front surface **52,** is also not uniform in the same regard. As shown, the width of the front surface **52** is smaller than a width **W₂** of cable jacket **38 (****FIG. 2D****)** and is tailored to cooperate with the passage of retention body **60.**

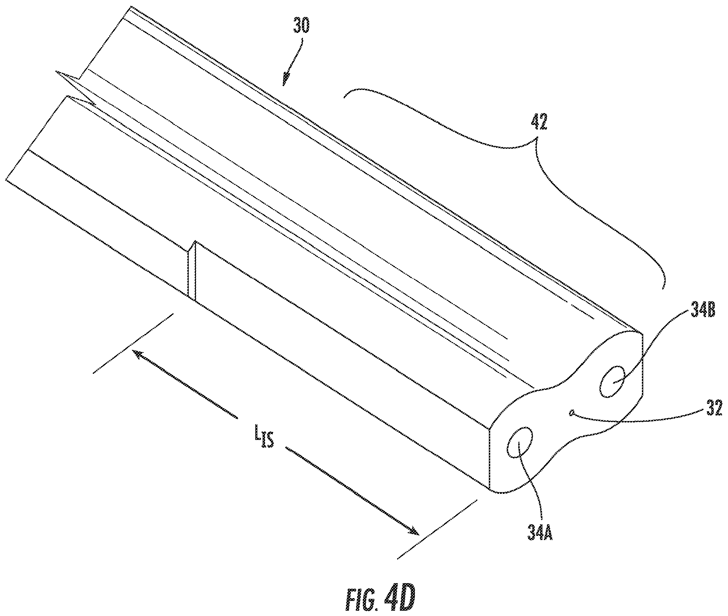

Additional steps not according to the invention may be performed on end portion **42** of the fiber optic cable being inserted into retention body **60** as shown schematically in **FIG. 4D****.** Typically, fiber optic cables have nominal dimensions that may vary slightly during manufacturing while still meeting the requirements/specifications. For instance, during normal manufacturing the outer dimension of the fiber optic cable may vary by a fraction of a millimeter, but these slight size variations may cause the fit between the retention body **60** and end portion **42** of the fiber optic cable to vary. In other words, the fit between the end portion **42** and retention body **60** is too tight or too loose from the desired fit therebetween such as a friction fit. In order to obtain a similar/consistent fit between an end portion **42** of the fiber optic cable and retention body **60** one or more initial sizing steps may be performed to end portion **42** of the fiber optic cable before the preparation steps discussed above to accommodate for any slightly oversized or undersized fiber optic cables.

By way of example, an oversized fiber optic cable may have an initial sizing step where one or more outer dimensions of the fiber optic cable are shaved or cut to a predetermined size, thereby allowing the further preparation steps to be preformed on nominally sized end portion **42** of the fiber optic cable. For instance, one or more sides of the end portion **42** of the fiber optic cable are initially shaved to a suitable length **L_{IS}** so that all of the fiber optic cables start with an end portion having a very similar size for further preparation as shown in **FIG. 4D****.** After the initial sizing step the other desired preparation steps are performed, thereby creating the desired profile for the end portion **42** of the fiber optic cable. Consequently, the end portions **42** of the prepared optical fiber cables have a tighter ranges of final prepared dimensions for obtaining a similar fit between the retention body and the end portion **42** of the fiber optic cable even though the initial outer dimensions of the fiber optic cables may have varied.

A single initial sizing step can address fiber optic cables that are slightly oversized or undersized from the nominal dimensions by selecting appropriate dimensions for the tolerances from nominal dimensions of the fiber optic cable. However, undersized fiber optic cables may be addressed in other ways such as building up a portion of the outer dimension of the fiber optic cable. For instance, a tape or other structure may be placed about an end portion of the fiber optic cable for creating the desired fit between the prepared fiber optic cable and retention body.

**FIGS. 5A and 5B** illustrate fiber optic cable **30** being inserted into a retention body **60** and a fiber optic connector sub-assembly **62,** thereby forming a fiber optic cable assembly **64.** **FIG. 5A** depicts end portion **42** of fiber optic cable **30** being inserted into a rear end opening **65** of retention body **60** and into a retention body passage extending threrethrough. More specifically, bare portion **43** of optical fiber **32** extends through a front end opening **66** of retention body **60** past a ferrule holder **68** and into a bore (not numbered) of a ferrule **70** as shown in **FIG. 5B****.** Fiber optic connector sub-assembly **62** includes ferrule **70** and a connector housing **72** that houses and supports ferrule holder **68.** Additionally, the fiber optic sub-assembly may also include a spring for biasing the ferrule forward. Fiber optic connector sub-assembly **62** may be any suitable configuration type such as a SC-type or LC-type, but other types fiber optic connector sub-assemblies are possible. Retention body **60** supports fiber optic cable **30** such that the bare portion **43** of the optical fiber **32** is securely retained inside ferrule **70** for inhibiting the effect of changes in optical fiber **32** length or misalignment issues when fiber optic cable **30** undergoes stress (e.g., compression, tension, side-load, etc.). During assembly, fiber optic connector sub-assembly **62** is attached to retention body **60,** thereby forming fiber optic cable assembly **64.** Specifically, fiber optic connector sub-assembly **62** is attached to retention body **60** by snap-fitting with interlocking fingers **74** disposed on opposite sides of retention body **60.** Interlocking fingers **74** are configured for latching into recessions **76** formed into and on opposite sides of the connector housing **72** of fiber optic connector sub-assembly **62.**

Retention body **60** also includes a lead-in portion **78** integrally formed therewith that extends from a medial portion of retention body **60** toward the rear for supporting the fiber optic cable **30.** Lead-in portion **78** is optional portion of retention body **60,** but it reduces the possibility of sharp bending of fiber optic cable **30** adjacent to retention body **60,** thereby inhibiting side-load stress from cracking and/or splintering strength components, which can reduce their strength. This is because lead-in portion **78** extends the point where the side-loading and/or bending force is applied on fiber optic cable **30** with respect to retention body **60.** Retention body **60** and its lead-in portion **78** are relatively rigid so that when a side-load or bending force is applied to the fiber optic cable **30** it applies the bending force about the retention body **60.** In other words, lead-in portion **78** provides a longer support surface for cradling/supporting the fiber optic cable. In other embodiments, lead-in portion **78** may also provide a crimping portion for a crimp band and/or can have a heat shrink tubing disposed about a portion to further secure and/or seal the interface between the retention body **60** and fiber optic cable **30.**

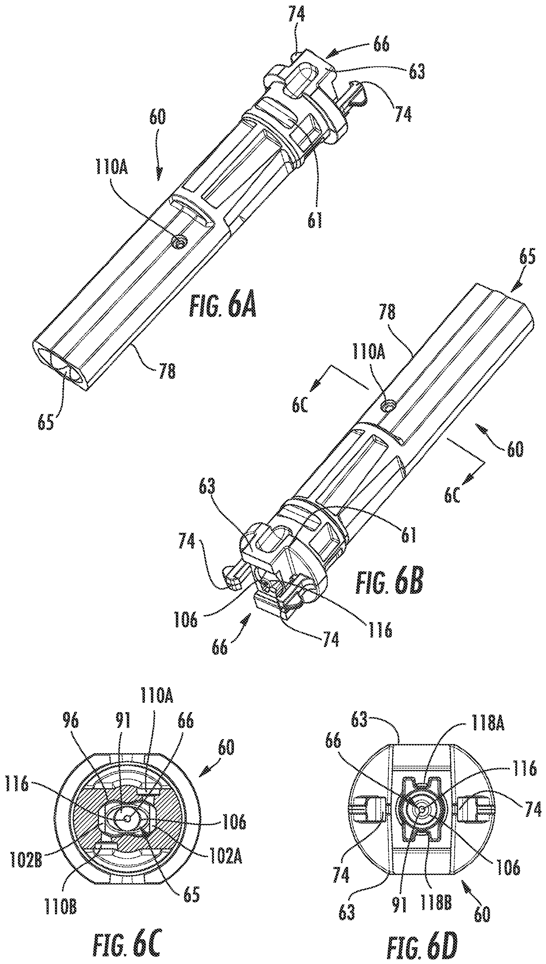

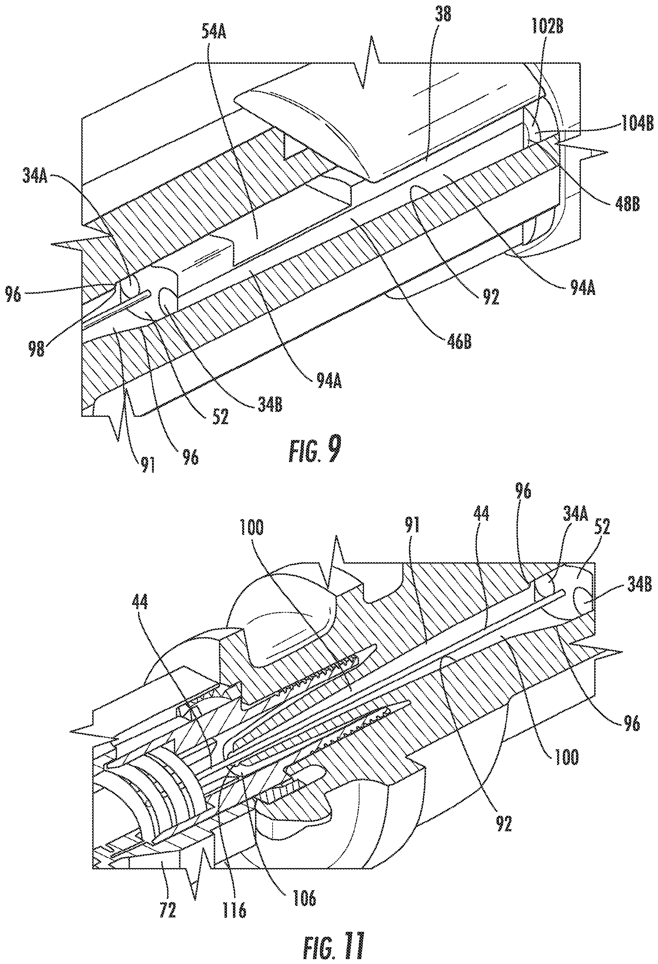

**FIGS. 6A and 6B** illustrate rear and front perspective views of retention body **60.** As illustrated, lead-in portion **78** of the retention body **60** contains a first orifice **110A** for injecting a bonding agent into retention body **60.** First orifice **110A** may also be placed in other portions of the retention body **60.** In this embodiment, first orifice **110A** is in communication with a bonding chamber **94A (****FIG. 9****)** provided internally to the retention body **60** when end portion **42** of fiber optic cable **30** is fully inserted into a retention body passage **91.** First orifice **110A** provides a port for injecting a bonding agent into bonding chamber **94A** (also illustrated in **FIG. 9**) during construction of fiber optic cable assembly **64.** A bonding agent may be employed to bond the partially exposed portions **46A,46B** of strength components **34A,34B** to the retention body **60,** thereby facilitating securing the components together. Any suitable type of bonding agent may be used. Illustratively, the bonding agent may be radiation curable epoxy such as a visible light curable epoxy or an ultraviolet (UV) light curable epoxy, a heat curable epoxy, adhesive, resin, glue, or the like for securing the same. If a radiation curable substance is used such as a light or UV curable epoxy, then the retention body **60** should be translucent for allowing the radiation to cure the radiation curable substance in a suitable manner. By way of example, a suitable bonding agent is a 2-part heat curable epoxy available from Masterbond of Hackensack, NJ under the tradename EP62-1TK. Another suitable bonding agent having a thicker viscosity is available from Loctite of Moorsville, NC under the tradename Hysol-0151.

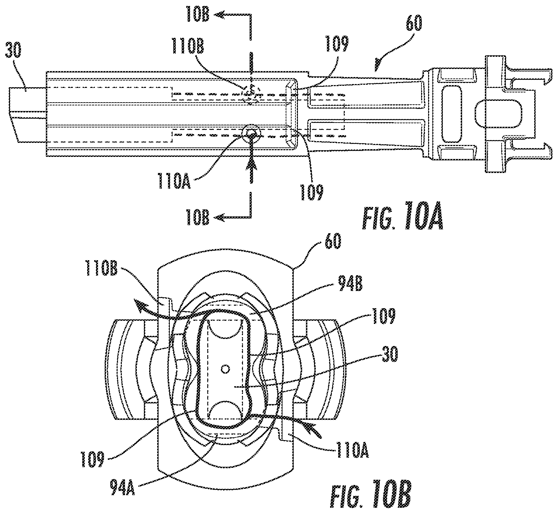

Likewise, a second orifice **110B (****FIG. 6C****)** may also be formed in the opposing side of lead-in portion **78.** Second orifice **110B** can have one or more different purposes. For instance, a second orifice can be used for venting (i.e., allowing air to escape when injecting a bonding agent) of the first orifice **110A,** used to inject the bonding agent and/or used to determine if the bonding chamber is adequately filled. In this embodiment, second orifice **110B** is generally aligned with the first orifice **110A** (i.e., located in a similar transverse cross-sectional plane). Like the first orifice **110A,** the second orifice **110B** is in communication with a second bonding chamber **94B (****FIG. 10B****)** internally to the retention body **60** when the end portion **42** of fiber optic cable **30** is fully inserted into retention body passage **91.** Second orifice **110B** may provide another location for injecting the bonding agent into the second bonding chamber **94B,** thereby securing the partially exposed portion **46B** of the strength component **34B** and a portion of cable jacket **38** with retention body **60.** For example, if a cross-flow channel is not provided in the end portion **42,** providing the first and second orifices **110A 110B** allows the bonding agent to be injected separately into both bonding chambers **94A, 94B,** but another vent may be necessary. Additionally, if cross-flow chambers are provided the second orifice **110B** may be used to determined when the chamber is substantially full. In other embodiments, the second orifice may be on the same side or any other suitable location.

Fiber optic cables having end portions prepared without cross-flow channels such as fiber optic cable **230** in **FIG. 2F** and not according to the invention allows the bonding agent to flow around the end portion when in the liquid state, thereby filling the cavity. Additionally, the assembly may be positioned vertically to allowing gravity to aid the bonding agent in flowing about the end portion of the fiber optic cable while filling and/or during curing.

**FIGS. 6C** and **6D** respectively illustrate a cross-sectional view and a front view of the retention body **60.** As illustrated in **FIG. 6C****,** the retention body **60** has a rear end opening **65** that generally matches the general exterior profile of fiber optic cable **30,** thereby providing a snug fit between the cable jacket **38** and the retention body **60.** Other embodiments of the retention body match the general exterior profile of the fiber optic cable intended for use therewith. Retention body passage **91** extends from rear end opening **65** where it is sized for the exterior profile of fiber optic cable **30** to front end opening **66** that is sized for the bare optical fiber **43** to extend therethrough. As shown in **FIG. 6C****,** the inner diameter of the front portion of retention body passage **91** tapers in a conical fashion **106** and terminates at front end opening **66** of the retention body **60.** Although, the front portion is generally conical other shapes/geometries are possible for reducing the size toward the front portion.

A front sealing structure **96** is also visible in **FIG. 6C** along with sealing structures **102A, 102B.** Generally speaking, bonding chambers **94A, 94B** are closed off at the front sealing structure **96** and sealing structures **102A, 102B** of retention body **60** after the prepared fiber optic cable **30** is inserted therein. The bonding chambers are closed off so that the bonding agent injected into the respective bonding chambers does not undesirably escape. Front sealing structure **96** along with sealing structures **102A, 102B** of retention body **60** respectively abut with the front surface **52** and the back sealing locations **48A, 48B** of the fiber optic cable **30** for closing off the bonding chambers **94A, 94B** at the front end. Other embodiments of the retention body can use other shapes and/or geometries for inhibiting the bonding agent from escaping. For instance, a simple interference or friction fit may be employed between the fiber optic cable and the retention body or the like. **FIG. 6D** illustrates the front end view of the retention body **60** showing that cone **106** that carries the optical fiber **32** extends through a front end orifice **116** formed by the retention body **60.** Retention body **60** also includes protrusions **118A, 118B** at the front end for providing lateral stability for the connector housing of fiber optic connector sub-assembly **62.**

Retention body **60** also includes features that may interface with other components of a connector. For instance, retention body **60** includes a locking feature **61** for attaching the same with a connector component. In this embodiment, locking features **61** are disposed on opposite sides of retention body **60** for attaching with the connector component as described herein. As best shown in **FIG. 6D****,** retention body **60** also includes one or more alignment features **63.** In this embodiment, alignment features **63** are disposed on opposite sides of the front end of retention body **60.** Specifically, alignment features **63** are flat portions that generally align the retention body such as during assembly of the connector as discussed herein. In other embodiments, retention bodies can have alignment features that allows assembly with other components in only one orientation.

Other variations of the retention body are possible. For instance, **FIG. 7A** depicts an alternative retention body **60'** and **FIG. 7B** depicts retention body **60'** attached to fiber optic cable **30.** Retention body **60'** is similar to retention body **60** and has a rear end opening **65'** that leads to a retention body passage **91'** that extends to a front end opening **66'.** Retention body **60'** also includes interlocking fingers **74** disposed on opposite sides of the same for attaching fiber optic connector sub-assembly **62** thereto as shown in **FIG. 7B****.** Rear end opening **65'** generally matches the general exterior profile for receiving the intended fiber optic cable such as fiber optic cable **30.** As with retention body **60,** after fully inserting fiber optic cable **30** into retention body **60'** the bonding agent may be injected through one or more orifices **110'** for securing fiber optic cable **30** with the retention body **60'.** However, retention body **60'** does not include the extended lead-in portion for supporting the fiber optic cable, nor does it include the buckling chamber as discussed below. Other features of the retention body **60'** may be the same or similar to those in the retention body **60.**

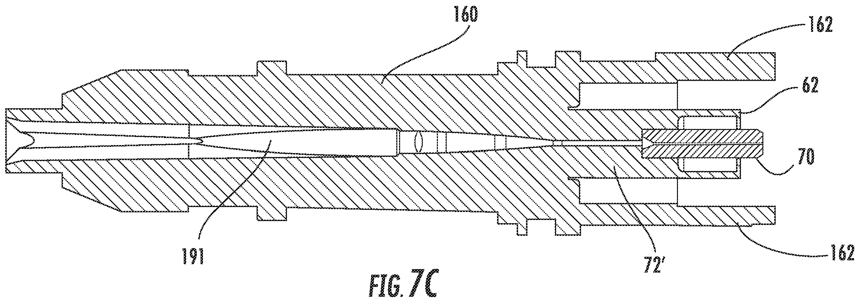

Still other variations of retention bodies are possible such as integrating plug feature into the same. Illustratively, **FIG. 7C** depicts retention body **160** similar to retention body **60,** but which has connector mating geometry and a connector housing **72** integrated as a portion of the same. Other embodiments can have either the connector mating geometry and/or the connector housing integrated with the retention body. Specifically, **FIG. 7C** depicts a side cross-sectional view of retention body **160** having alignment fingers **162** integrated therewith. Alignment fingers **162** key retention body **160** with a complementary receptacle when making an optical connection. Additionally, retention body **160** includes other geometry on the outer profile that may be similar to the outer profile for a plug housing discussed below. Like retention body **60,** retention body **160** has a retention body passage **191** therethrough for receiving the end portion of the fiber optic cable at the rear end and allowing the optical fiber to extend through the opening at the front end. Retention body **160** is also similar to fiber optic assembly **64** in that a fiber optic connector sub-assembly **62** is attaches thereto. As shown, ferrule **70** is fixed with respect to connector housing **72'.** In other words, ferrule is not spring loaded, but instead press-fitted into connector housing **72'.**

Besides embodiments that include a retention body with integrated mating or fiber optic connector features, retention body embodiments may be formed from more than one-piece. For instance, a retention body can have an end cap portion that attaches to the rear of the retention body. The end cap portion can form one or more functions. For instance, the end cap portion can close and inhibiting leaking of the bonding chamber and/or provide support for the cable where it enters the retention body.

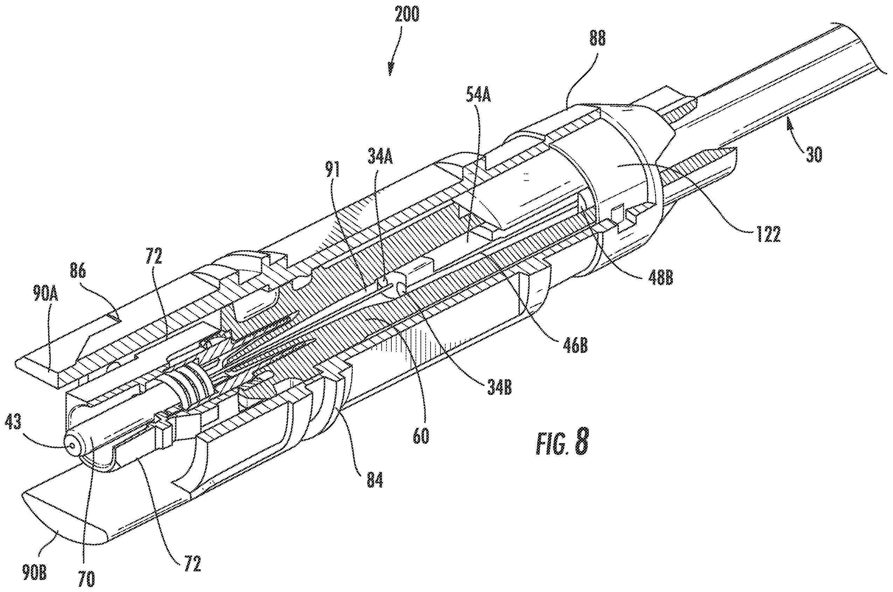

**FIGS. 8-11** depict further details of the fiber optic assemblies discussed herein. Specifically, **FIG. 8** illustrates a sectional view of fiber optic cable assembly **64** as a portion of a larger fiber optic cable assembly **200** with the bonding agent removed for clarity, and **FIGS. 9 and 11** depict close-up sectional views of different portions of fiber optic cable assembly **200.** **FIGS. 10A** and **10B** respectively illustrate the flow path for the bonding agent of fiber optic cable assembly **64.** Fiber optic cable assembly **200** includes retention body **60,** fiber optic connector sub-assembly **62,** and a plug housing **84** having an end piece **122** that attaches thereto. As illustrated in the quarter-sectional view of **FIG. 8****,** plug housing **84** is substantially hollow and generally receives and protects a portion of fiber optic cable assembly **64** along with fiber optic connector sub-assembly **62.** Specifically, plug housing **84** has a generally hollow cylindrical shape with a first end **86** and a second end **88** with a through passageway therebetween. As discussed above, retention body **60** includes flat portions **63** for inhibiting relative rotation between plug housing **84** and retention body **60** when assembled. Retention body also includes locking feature **61** for securing plug housing **84** therewith. Optionally, plug housing **84** may also provide a keying feature (i.e., a keyed passageway to complimentary fit with retention body **60)** so that retention body **60** is received therein in one orientation. Plug housing **84** also includes a pair of alignment fingers **90A, 90B** having different shapes for mating with a complementary receptacle (not shown) in one orientation.

**FIG. 9** illustrates a close-up view of **FIG. 8** showing the end portion **42** of the fiber optic cable **30** retained inside the retention body **60** with the bonding agent removed for the purposes of clarity in the illustration. More specifically, interior surface **92** of retention body **60** is designed to fit and interface with the external geometric shape of the end portion **42** of fiber optic cable **30.** By way of example, retention body passage **91** has an inner diameter at the rear end opening **65** of retention body **60** that is greater than the end height **EH** of the end portion **42** so that fiber optic cable **30** may be inserted therein. Moreover, as shown the bonding chamber(s) are formed between retention body **60** and the end portion **42** of the fiber optic cable. In this embodiment, partially exposed portions **46A, 46B** of the strength components **34A,34B** and cable jacket **38** are secured with retention body **60.** Simply stated, the strength components **34A,34B** are secured to retention body **60,** thereby strain relieving the fiber optic cable so that pulling forces are transferred to the retention body **60.** Likewise, **FIG. 9** shows one of the optional cross-flow chamber(s) (not numbered) formed between retention body **60** and cross-flow channels **54A** and **54B** of fiber optic cable **30.** Cross-flow channels **54A** and **54B** allow the bonding agent to flow between bonding chambers **94A, 94B** (the bonding chambers on the sides of fiber optic cable **30)** and form a stronger bond between retention body **60** and end portion **42** of fiber optic cable **30.** Interior surface **92** is formed by the passage of the retention body **60** and along with end portion **42** create flow path(s) for the bonding agent.

Generally speaking, the opening formed by the interior wall **92** gets small as it extends from rear end opening **65** toward the front end opening **66** of the retention body **60** such as by tapering down in size. This change in size inhibits the end portion **42** of fiber optic cable **30** from being over-extended into the retention body passage **91.** In other words, the retention body passage **91** acts as a stop so that end portion **42** of the fiber optic cable **30** is inserted the proper amount for aligning the structures. In other words, the front surface **52** of end portion **42** extends into the retention body passage **91** to a point where the inner diameter of the retention body passage **91** becomes smaller in diameter than the size of the front surface **52.** This prevents the end portion **42** from being extended through the retention body passage **91** beyond designed limits, but allows the optical fiber **32** to continue extending through the retention body passage **91** and through the front end opening **66** of retention body **60** and into the fiber optic connector sub-assembly **62.** Moreover, this abutment blocks the flow of the bonding agent beyond the front surface **52.** The tapering of the retention body passage **91** is also designed so that the desired amount of fiber optic cable **30** is inserted into the retention body passage **91** to properly secure the fiber optic cable **30** to the retention body **60.**

Interior wall **92** of the retention body **60** also includes the front sealing structure **96.** The closing of the front ends of the bonding chambers **94A, 94B** inhibits the bonding agent from flowing into a buckling chamber **100 (****FIG. 11****)** defined by the retention body passage **91** adjacent the front end opening **66.** Likewise, the retention body passage **91** of the retention body **60** may optionally include a rear shoulder structure for providing one or more rear interior surfaces **104A, 104B** for the back sealing locations **48A, 48B** to abut against, thereby closing off the rear ends of the bonding chambers **94A, 94B.** The rear shoulder structure may not be necessary if the bonding agent has a suitable viscosity to inhibit flowing past any gaps that may exist. Closing off the rear ends of bonding chambers **94A, 94B** inhibits the bonding agent from escaping outside of the retention body passage **91** and outside of the fiber optic cable assembly **64.** Preferably, the bonding agent does not escape the bonding chambers **94A, 94B,** or allow air pockets to form in the bonding chambers **94A, 94B,** which could compromise the integrity of the bonding between the fiber optic cable **30** and the retention body **60.** The cured bonding agent may also act to close off the bonding chambers **94A, 94B** to inhibit the ingress of water or other materials into the structure.

If one or more cross-flow channels are provided, the second orifice **110B** can also be used to determine if the bonding chambers **94A, 94B** are substantially full. A bonding agent **109** can be injected into the first orifice **110A** as illustrated in **FIGS. 10A and 10B****.** As the bonding chamber **94A** fills, the bonding agent **109** enters one or both (if provided) cross-flow channels **54A, 54B** and flows into the second bonding chamber 94B. When the second bonding chamber **94B** is full, the bonding agent **109** can start to flow out of the second orifice **110B**. If desired, a sensing device having a sensor with a field of view can be installed proximate the second orifice **110B** during assembly to detect when bonding chambers **94A, 94B** are filled to the desired level or a predetermined amount of bonding agent can be injected. Second orifice **110B** may also allow venting of the air inside the retention body **60,** thereby inhibiting air from being trapped within the bonding agent **109,** which can compromise the bonding strength. Note that the bonding agent **109** can be injected in either orifice **110A, 110B**, and the other orifice **110A, 110B** can be used to determine when the bonding chambers **94A, 94B** are filled to the desired level.

**FIGS. 10A** and **10B** respectively illustrate a plan view and a cross-sectional view that schematically depicts the flow path of bonding agent **109** within retention body **60** when fiber optic cable **30** is fully inserted therein. Specifically, **FIGS. 10A** and **10B** show the flow path of the bonding agent into and around bonding chambers **94A, 94B** (not visible) and cross-flow chambers (not numbered). More specifically, **FIG. 10A** shows the flow path of bonding agent **109** into orifice **110A** represented by arrow pointing into the same. As shown by the dashed line in **FIG 10A****,** bonding agent **109** enters the retention body **60** and can move forward and backwards into the respective bonding chamber. Moreover, as shown by the thick solid line in **FIG 10B****,** in addition to flowing forward and backward bonding agent **109** can flow about fiber optic cable **30** into the cross-flow chambers and into the bonding chamber on the other side of fiber optic cable **30.** Moreover, air can escape out of orifice **110B** as the bonding agent is injected into orifice **110A.**

**FIG. 11** illustrates a close-up view of **FIG. 8** showing front sealing location **52** of the end portion **42** abutted against front sealing structure **96.** Thus, the front surface **52** of the end portion **42** does not extend beyond the front sealing structure **96.** Any bonding agent injected into the bonding chambers **94A, 94B** is prevented from flowing beyond front surface **52.** However, the bare and coated portions **43, 44** of the optical fiber **32,** being smaller in diameter than the inner diameter of the retention body passage **91,** extend through the retention body passage **91** and through the front end opening **66** of the retention body **60** for insertion into the ferrule holder **68** of the fiber optic connector sub-assembly **62.** Also, as shown cone **106** extends into a portion of fiber optic connector sub-assembly **62.** Interior wall **92** of retention body **60** is shaped such that the retention body passage **91** tapers down in size within cone **106** and extends through the front end orifice **116** of the retention body **60.** In other words, retention body passage **91** extends into cone **106** and through the front end opening **66** of the same. By way of example, cone **106** may have a length of about 14-15 millimeters (mm), but other suitable dimensions are possible if the structure is used. Cone **106** also provides an alignment or centering feature for the optical fiber **32** as it is extended therethrough so that the optical fiber **32** exits the retention body **60** at a defined location for alignment with fiber optic connector sub-assembly **62.** For example, the inner diameter of the retention body passage **91** at the front end opening **66** is about 500 micrometers (µm), but other suitable sizes are possible such as 250 or 700 micrometers so long as it allows optical fiber **32** to pass therethrough. Simply stated, retention body passage **91** disposed forward of front shoulder structure **96** of this embodiment has an inner diameter that is larger than optical fiber **32,** thereby creating a buckling chamber **100.**

Buckling chamber **100** is disposed within a forward portion of retention body **60** and provides space for optical fiber **32** to move (i.e., shift, bend, or the like) in case the optical ferrule **70** retracts and pushes the optical fiber **32** back into retention body passage **91** (i.e., accommodates longitudinal movement). Buckling chamber **100** may be provided in the retention body independent of the securing method between the retention body and the fiber optic cable. By way of explanation, buckling chamber **100** accommodates the backward movement of ferrule **70** since it is spring loaded within the fiber optic connector sub-assembly **62,** which pushes optical fiber **32** backwards as much as 0.5 millimeters (mm). Moreover, buckling chamber **100** is not filled with the bonding agent so that optical fiber **32** can move and/or bend, thereby inhibiting optical attenuation since it can not move backward into fiber optic cable **30.** In other words, the design of fiber optic cable **30** does not allow longitudinal movement of optical fiber 32 into fiber optic cable **30.** Without buckling chamber **100,** movement of ferrule **70** may cause optical fiber **32** to break as opposed to bend and/or have elevated levels of optical attenuation. Generally speaking, buckling chamber **100** has a reduced size (i.e., the bucking chamber converges) moving toward the front for providing an alignment feature for guiding (i.e., centering) the optical fiber as it is inserted into the retention body and/or fiber optic connector sub-assembly. Thus, providing a buckling chamber **100** in a retention body may be desired regardless of the type of fiber optic cable used (i.e., whether or not the optical fiber can move longitudinally), whether the retention body 60 is secured to the strength components **34A, 34B,** the ferrule is fixed or spring loaded, and/or the like.

Fiber optic cables can be preconnectorized in the field or the factory on one or more ends with a fiber optic connector such as a hardened fiber optic connector, thereby making a preconnectorized fiber optic cable or assembly suitable for plug and play connectivity by the craft. As used herein, a hardened connector refers to a robust fiber optic connector that is weatherproof, thereby making it suitable for use in the outside plant environment, but it is possible to use the hardened connector indoors. For instance, the craft may route the preconnectorized fiber optic cable having the hardened connector to a premises, a multi-port device, a network interface device (NID), an optical network terminal (ONT), a closure, or the like.

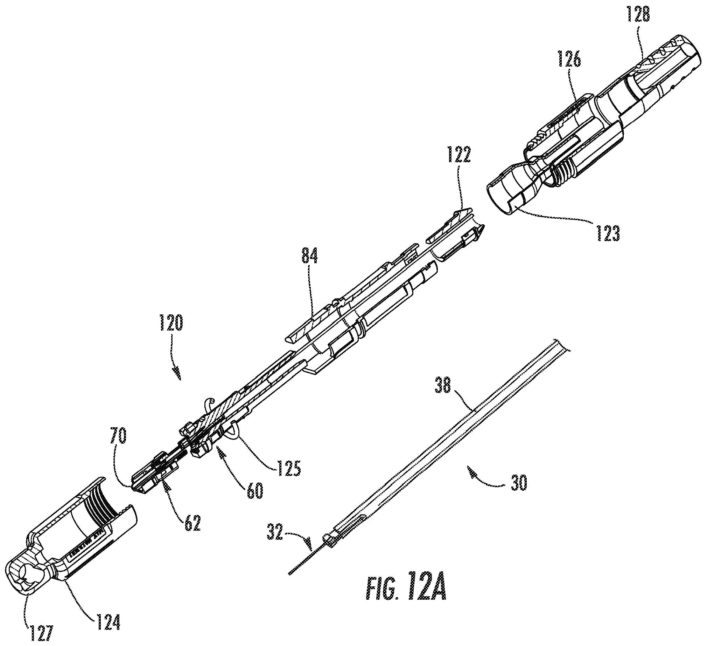

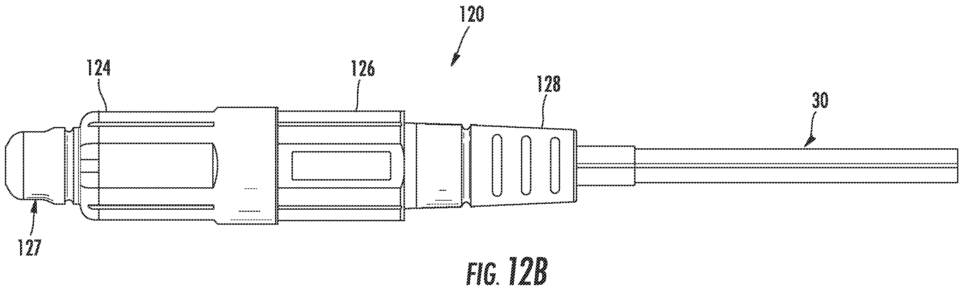

**FIGS. 12A** and **12B** respectively illustrate an exploded and assembled view of fiber optic cable assembly **64** as part of an explanatory hardened fiber optic connector assembly **120.** Hardened fiber optic connector assembly **120** includes plug housing **84** that receives a portion of fiber optic cable assembly **64** therein. Fiber optic connector **120** further includes end piece **122,** a heat shrink **123,** a protective cap **124,** one or more O-rings **125,** a coupling nut **126,** and a boot **128.** Protective cap **124** is provided that is configured to be placed about the fiber optic connector sub-assembly **64** for protecting ferrule **70.** Protective cap **124** is configured to theadly engage a coupling nut **126** that fits over plug housing **84** and that can rotate thereabout. Coupling nut **126** is also used for mating fiber optic connector **120** with a complementary receptacle (not shown). One or more silicone O-rings **125** are disposed on plug housing **84** to environmentally seal the protective cap **124** to the plug housing **84** and/or with the complementary receptacle. Protective cap **124** may also incorporate an integral pulling eye **127** for pulling the assembly during installation and the like. Heat shrink **123** fits over a portion of plug housing **84** and a portion of fiber optic cable **30** for sealing the interface therebetween. Boot **128** supports fiber optic cable **30** to inhibit and/or reduce sharp bending of the fiber optic cable **30** near an end of the fiber optic connector **120.** Fiber optic connector **120** may also include a lanyard (not shown) for attaching protective cap **124** to the same. Moreover, the retention body may be used as a kit of parts for field or factory use that further includes one or more parts of hardened fiber optic connector assembly **120** or other suitable fiber optic connectors.

Hardened fiber optic connector **120** is depicted with a SC type of fiber optic connector sub-assembly **62.** However, other types of connector assemblies, such as LC, FC, ST, MT, and MT-RJ, are also contemplated with the concepts of the disclosure. Thus, suitable fiber optic cables may be used with any suitable retention body and/or fiber optic connector sub-assembly, thereby resulting in numerous fiber optic assembly combinations.

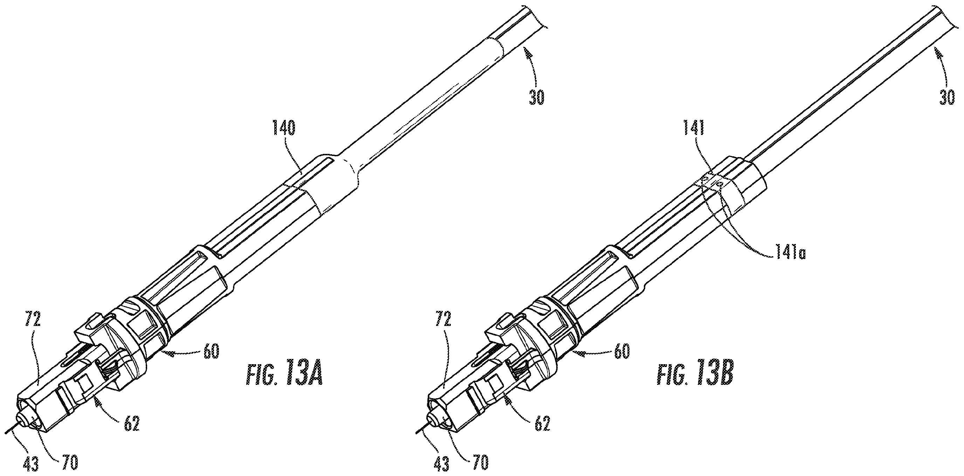

Additionally, other methods of securing the retention body to the fiber optic cable are possible, thereby making it versatile. These other methods may be employed in lieu of or in addition to using the bonding agent. For example, **FIGS. 13A and 13B** illustrate perspective views of the retention body **60** employing different mechanical elements for securing the end portion of the fiber optic cable **130** thereto. Specifically, **FIG. 13A** illustrates a crimp band **140** and **FIG. 13B** illustrates a mechanical element **141** that penetrates the fiber optic cable for securing retention body **60** with fiber optic cable **30.** Crimp band **140** has a forward portion that is crimped to the rear portion of retention body **60** and a rear portion that is crimped to fiber optic cable **130.** Crimp band **140** is preferably made from brass, but other suitable crimpable materials are possible. Conversely, mechanical element **141** fits entirely over retention body **60** and is punched so that fingers **141a** extend into the strength components of fiber optic cable **30,** thereby securing the same. Additionally, retention body **60** may include one or more windows at the top and bottom that align with the placement of mechanical element **141** so that fingers **141a** do not have to pierce retention body **60.** Further, if a mechanical element is employed the retention body should be robust enough to withstand the crimping and maintain the desired level of attachment.

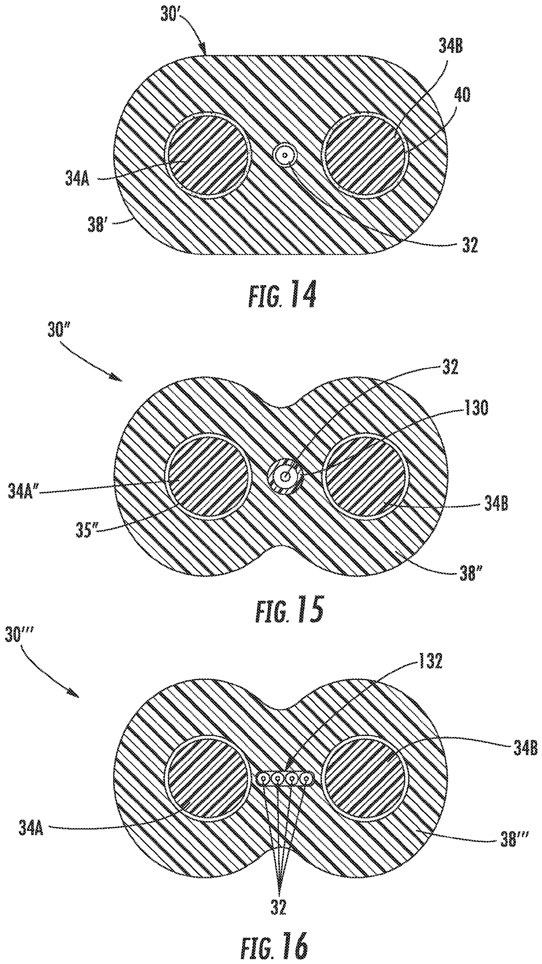

Additionally, fiber optic cable designs according to the concepts of the disclosure can have any suitable number of optical fibers in any suitable configuration such as bare, colored, coated, or ribbonized format. For example, **FIG. 14** is a cross-sectional view of a fiber optic cable **30'** similar to that of **FIG. 2****,** except that the indentations **39A, 39B** in the cable jacket **38** are not included. In other words, cable jacket **38'** has a flat profile. **FIG. 15** is a cross-sectional view of a fiber optic cable **30"** similar to that of **FIG. 2****,** except optical fiber **32** is housed with a buffer tube **130.** **FIG. 16** illustrates a cross-sectional view of a fiber optic cable **30'"** having a plurality of optical fibers **32.** Specifically, four optical fibers **32** are disposed in an optical fiber ribbon **132,** but other fiber counts are possible. Other fiber optic cable designs and/or cable strip preparation are also possible with the concepts disclosed herein.

By way of example, **FIG. 17** depicts a perspective view of an explanatory fiber optic cable **330** having an end portion prepared for insertion to a suitable retention body not according to the invention. Specifically, fiber optic cable **330** is the same as fiber optic cable **30,** except that an end portion **342** is prepared in a different manner as shown. End portion **342** is formed in multiple steps and partially exposes and/or shaves a portion of first and second strength components **34A, 34B.** By way of example, end portion **342** is formed by first cutting the sides of fiber optic cable **330** by starting the cut at the appropriate angle for creating back sealing locations **348A,348B** (not visible) on opposing sides and then cutting longitudinally forward along the fiber optic cable. Next, the top and bottom surfaces are cut starting at the cable seating locations (not numbered) which also help define the cross-flow chambers when inserted into a suitable retention body and cutting longitudinally forward along the fiber optic cable. By way of example, an appropriate angle for starting the cuts is about 30 degrees, but other angles are possible for cooperating with a suitable retention body. After cutting the sides, top, and bottom, a rectangular section forward of the front sealing locations remains that has a height that is about the same as the strength components. The rectangular section includes the strength components **34A, 34B,** the optical fiber **32** and the remaining portion of the cable jacket that all extend to the front surface of the end portion. Next, strength components **34A, 34B** are cut back to the desired length from the rectangular section. Strength components **34A, 34B** may be slightly separated from the remaining portion of the cable jacket during the cutting of the same such as by pushing down the remaining portion of the cable jacket between the strength components. Thus, the optical fiber **32** and the remaining portion of the cable jacket are the only structure remaining forward of the cut strength components **34A, 34B.** Finally, the remaining portion of the cable jacket forward of the cut strength components **34A, 34B** is removed, but small remnants of the cable jacket may remain so long as it does not materially affect performance. This end portion preparation method is advantageous since it reduces the risk of damage to the optical fiber during the preparation process by reducing stress and/or strain experience by the optical fiber. In other words, a great deal of the cable jacket is removed before the remaining portion of the cable jacket disposed about the optical fiber is removed, thereby reducing forces on the optical fiber. Fiber optic cable **330** may be used in any suitable retention body or the like.

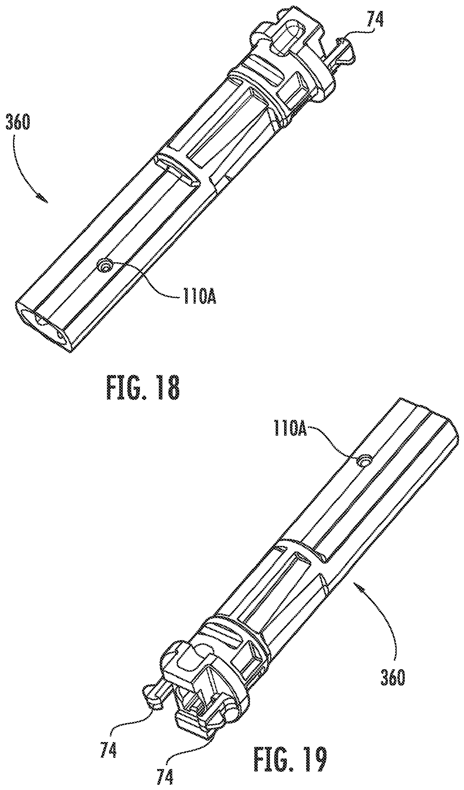

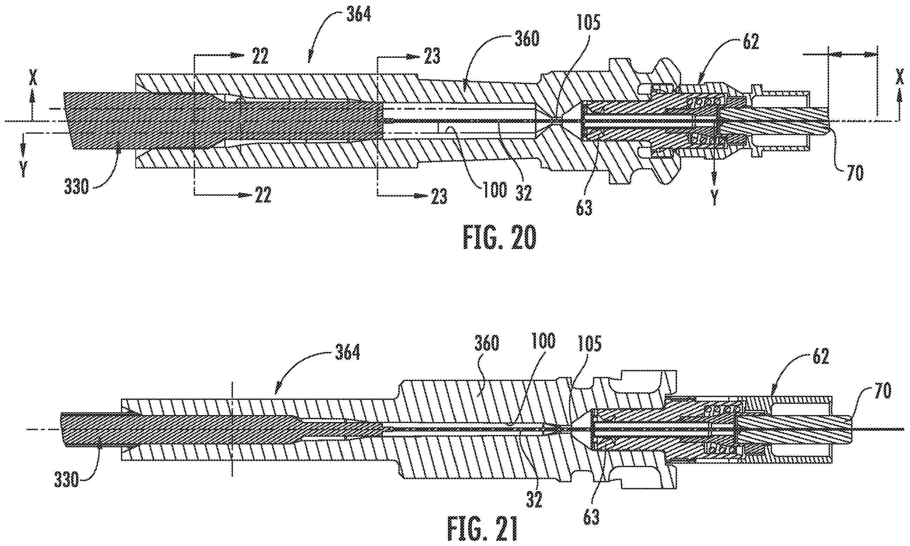

Illustratively, **FIGS. 18 and 19** are perspective views of an explanatory retention body **360** suitable for securing the fiber optic cable **330** thereto. Retention body **360** is similar to retention body **60,** but different in some regards. Retention body **360** receives a suitably prepared cable and fiber optic connector sub-assembly **62** for forming a fiber optic cable assembly **364** such as shown in **FIGS. 20** and **21** that is similar to fiber optic cable assembly **64.** Retention body **360** includes one or more orifices such as orifice **110A** for injecting a bonding agent into the retention body (or venting for the bonding agent) for securing fiber optic cable **330.** Additionally, orifice **110A** is shifted farther back on retention body **360** compared with retention body **60.** Likewise, bonding chamber (not numbered) and the buckling chamber **100** of retention body **360** are shifted farther back as shown in **FIGS. 20 and 21****,** but buckling chamber **100** is still disposed within a forward portion of retention body **360.** During assembly, fiber optic connector sub-assembly **62** is attached to retention body **360,** thereby forming fiber optic cable assembly **364.** Fiber optic connector sub-assembly **62** is attached to retention body **360** by snap-fitting with interlocking fingers **74** disposed on opposite sides of retention body **60** or in another suitable manner. As shown, interlocking fingers **74** are configured for latching into recessions **76** formed into and on opposite sides of the connector housing **72** of fiber optic connector sub-assembly **62.** Additionally, fiber optic cable assembly **364** may be modified for plug and play use as a fiber optic connector by adding a securing feature for the same.

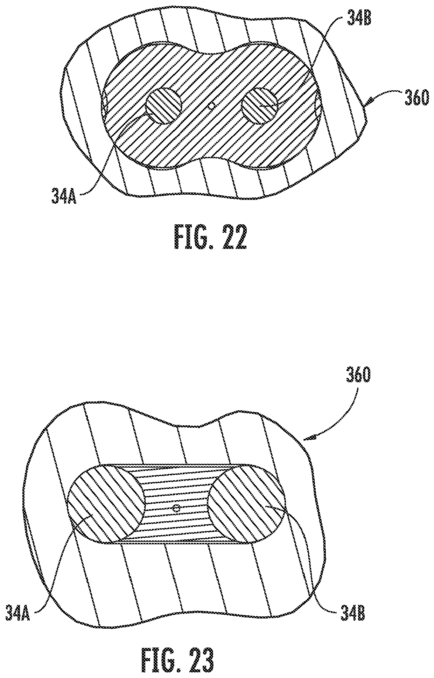

**FIGS. 20 and 21** are respective cross-sectional views of fiber optic cable assembly **364** including retention body **360** with fiber optic cable **330** and fiber optic sub-assembly attached thereto with the bonding agent removed for clarity. As best shown in **FIG. 21****,** fiber optic cable **330** is inserted into retention body **360** until it is fully seated therein by the interference between fiber optic cable **330** and retention body **360** and optical fiber **32** is inserted into the ferrule **70.** The rear body of the fiber optic connector sub-assembly **62** may include one or more centering features **63** for guiding and supporting the optical fiber therein. Specifically, cable seating locations **349** on the top and bottom of the fiber optic cable **330** interfere with a sidewall of the passage (not numbered) of retention body **360.** Back sealing locations **348A,348B** of fiber optic cable **330** close off the rear portion of retention body **360** so that the bonding agent is inhibited from escaping at the rear of same. As shown in **FIG. 21****,** the height of the passage through retention body **360** changes, thereby forming a front sealing portion with the rectangular portion of the cable so that the bonding agent is inhibited from escaping into the front of retention body **360.** **FIGS. 22 and 23** are respective transverse cross-sectional views taken along lines 22-22 and lines 23-23 of **FIG. 20** showing fiber optic cable **360** within the retention body. Generally speaking, the bonding chamber(s) of fiber optic cable assembly **364** is essentially formed between the cross-section of **FIG. 22** and **FIG. 23****.** As shown, this embodiment has a smaller bonding chamber and uses less bonding agent than the other embodiments, while still providing a similar level of retention.

Retention body **360** includes buckling chamber **100** disposed within a forward portion of the retention body, thereby accommodating movement of optical fiber **32.** Specifically, buckling chamber **100** is disposed between the front surface of fiber optic cable **330** and neck-down portion **105** of retention body **360.** Retention body **360** also includes a front end suitable for receiving fiber optic connector sub-assembly **62.** Retention body **360** also includes features that interface with other components of a connector such as the locking feature and alignment features. Variations of retention body **360** are also possible.

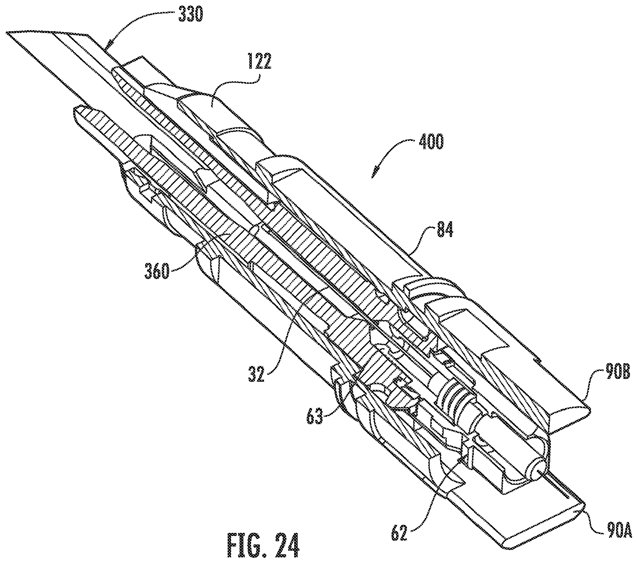

**FIG. 24** depicts a quarter-sectional view of the fiber optic cable assembly **364** forming a portion of a larger fiber optic cable assembly **400.** Fiber optic cable assembly **400** includes fiber optic cable assembly **364** disposed within plug housing **84** having an end piece **122** that attaches thereto, but the plug housing may be one-piece. As discussed above, retention body **360** includes flat portions (not numbered) for inhibiting relative rotation between plug housing **84** and retention body **360** when assembled. Retention body **360** also includes locking feature (not numbered) for securing plug housing **84** therewith. Plug housing **84** has a pair of alignment fingers **90A, 90B** with different shapes for mating with a complementary receptacle (not shown) in one orientation. Fiber optic cable assembly **400** can also include other components such as a coupling nut, heat shrink, one or more o-rings, cap, or other suitable components. Other embodiments of fiber optic cable assemblies are also possible such as having the retention body form a portion of the fiber optic connector such as by having the connector housing integrally formed with the retention body. Likewise, the alignment fingers and/or portions of the plug housing may be integral with the retention body.

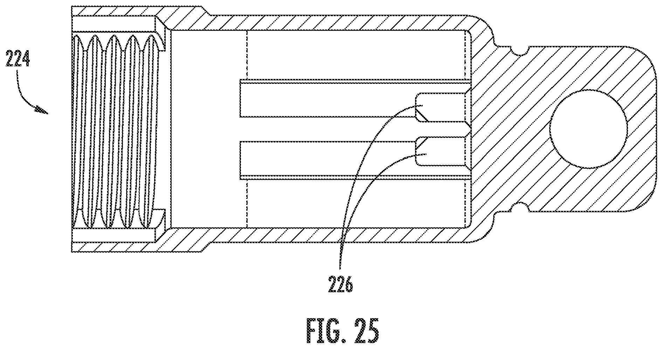

Additionally, variations on other components forming the fiber optic cable assembly are also possible. By way of example, **FIG. 25** depicts a sectional view of another suitable cap **224** for the connector assembly. As shown, cap **224** is similar to cap **124,** but cap **124** further includes one or more protrusions **226** that extend from an interior portion. When assembled and before installation, the fiber optic connector sub-assembly **62** preferably includes a dust cap (not shown) on ferrule **70,** thereby protecting the endface of the ferrule **70** and the polished optical fiber. Consequently, when cap **224** is attached to the hardened connector via coupling nut **126** or the like, the protrusions **226** preload the fiber optic connector sub-assembly **62.** In other words, when the cap **224** is secured the protrusions **226** apply a pressing force onto fiber optic connector sub-assembly **62** such as through the dust cap on ferrule **70** to inhibit movement if the hardened connector is roughly handled (i.e., dropped and/or banged around).

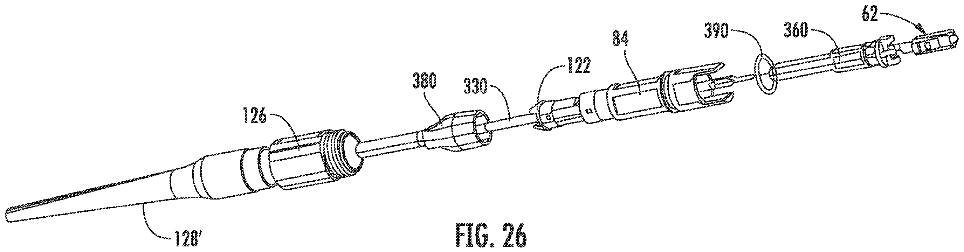

**FIG. 26** is an exploded perspective view of another fiber optic cable assembly. The fiber optic cable assembly shown includes a retention body **360** that receives fiber optic connector sub-assembly **62** and a portion thereof is disposed within plug housing **84** having an end piece **122** as discussed above. The fiber optic cable assembly also includes a heat shrink **380** having a first end that fits over end piece **112** and a second end that fits over a portion of fiber optic cable **330** for providing environmental protection therebetween. The fiber optic cable assembly also depicts a coupling nut **126,** an o-ring (not numbered) for sealing and a boot **128'.** Boot **128'** is longer than the other boots depicted and provides suitable performance under hot and cold flexing. Other variations on the fiber optic assemblies are possible such as multi-fiber versions of the fiber optic cable assembly.

**FIG. 27** shows a perspective view of another assembled fiber optic cable assembly **500** that has a fiber optic cable **530** with a toning element **531.** Like the other embodiments, retention body (not visible) receives fiber optic connector sub-assembly **62** and a portion thereof is disposed within plug housing **84.** As shown, toning element **531** is peeled back along fiber optic cable **530** for attaching the retention member and assembling the connector. For instance, toning element **531** is peeled back behind a boot **528** and a coupling nut **526** as shown. Additionally, a lanyard **560** is shown for attaching cap **224** to a portion of the cable assembly.

## Claims

1. A fiber optic cable assembly, comprising:
a fiber optic cable (30, 130, 230, 330) having an end portion (42), the end portion (42) including at least a portion of one strength component (34A, 34B) and a portion of a cable jacket (38), wherein the at least one strength component (34A, 34B) is partially exposed at the end portion (42) so that a portion of the strength component (34A, 34B) is revealed while a remaining portion of the strength component (34A, 34B) along a similar longitudinal location remains attached to the cable jacket (38) where a portion of the strength component (34A, 34B) is revealed by having a portion of the cable jacket (38) removed on opposing sides of the end portion (42) adjacent the front surface (52) and along the longitudinal axes of strength components (34A,34B), thereby forming one or more partially exposed portions (46A, 46B) of strength components (34A,34B); the fiber optic cable assembly being **characterised in that** a portion of the strength components is removed on opposing sides of the end portion adjacent the front surface and along the longitudinal axes of the strength components, thereby forming one or more partially exposed portions of strength components, and **in that** the fiber optic cable assembly comprises
a retention body (60, 60', 160, 360) having a retention body passage (91, 91' 191) extending therethrough, wherein the end portion of the fiber optic cable is disposed inside the retention body passage (91, 91', 191) and secured to the retention body (60, 60', 160, 360).

2. The fiber optic cable assembly of claims 1, further including a bonding agent for securing the end portion of the fiber optic cable (30, 130, 230, 330) to the retention body (60, 60', 160, 360).

3. The fiber optic cable assembly of claim 1 or 2, further including a fiber optic connector sub-assembly (62).

4. The fiber optic cable assembly of claims 1-3, further comprising a bonding chamber (94A, 94B) formed between an interior surface of the retention body (60, 60', 160, 360) and the end portion of the fiber optic cable (30, 130, 230, 330), wherein the cable is a flat cable where a recess is made into one of the outer jacket surfaces such that when the fiber optic cable is introduced into the retention body passage (91, 91' 191), a cross-flow chamber is formed in the bonding chamber (94A, 94B) between the recess surfaces and the inner passage surface.

5. The fiber optic cable assembly of claim 4, further including a fiber optic connector sub-assembly (62) and a plug housing (84), wherein the fiber optic connector sub-assembly (62) is attached to the retention body (60, 60', 160, 360) and the retention body (60, 60', 160, 360) is at least partially disposed within the plug housing (84).

6. The fiber optic cable assembly of claims 1-5, wherein the retention body is a portion of a fiber optic connector.

7. A method of assembling a fiber optic cable assembly, comprising the steps of:
providing a fiber optic cable (30, 130, 230, 330) having at least one optical fiber, at least one strength component (34A, 34B), and a cable jacket (38);
exposing a portion of the at least one optical fiber at an end portion (42) of the fiber optic cable;
removing a portion of the cable jacket (38), thereby creating a partially exposed portion of the at least one strength component (34A, 34B) at the end portion (42) of the fiber optic cable (30, 130, 230, 330) so that a portion of the strength component (34A, 34B) is revealed while a remaining portion of the strength component (34A, 34B) along a similar longitudinal location remains attached to the cable jacket (38) where a portion of the strength component (34A, 34B) is revealed by having a portion of the cable jacket (38) removed on opposing sides of the end portion (42) adjacent the front surface (52) and along the longitudinal axes of strength components (34A,34B), thereby forming one or more partially exposed portions (46A, 46B) of strength components (34A,34B);
the method being **characterised in that** a portion of the strength components is revealed by having a portion of the strength components removed on opposing sides of the end portion adjacent the front surface and along the longitudinal axes of the strength components, thereby forming one or more partially exposed portions of exposed strength components, and **in that** the end portion (42) of the fiber optic cable (30, 130, 230, 330) is inserted into a retention body passage defined by a retention body (60, 60', 160, 360) so the at least one optical fiber extends to a front opening defined by the retention body (60, 60', 160, 360); and
the end portion of the fiber optic cable (30, 130, 230, 330) is secured to the retention body (60, 60', 160, 360).

8. The method of claim 7, the step of securing further including injecting a bonding agent into the retention body (60, 60', 160, 360) and curing the bonding agent.

9. The method of claim 7, further comprising the step of forming a cross-flow chamber between the retention body (60, 60', 160, 360) and the fiber optic cable (30, 130, 230, 330).

10. The method of claim 7, further comprising the steps of attaching a connector sub-assembly to the retention body (60, 60', 160, 360); positioning a portion of the retention body (60, 60', 160, 360) within a plug housing; and providing a coupling nut.

## Patentansprüche

1. Anordnung eines faseroptischen Kabels, die Folgendes aufweist:
ein faseroptisches Kabel (30, 130, 230, 330) mit einem Endabschnitt (42), wobei der Endabschnitt (42) zumindest einen Abschnitt einer Zugentlastungskomponente (34A, 34B) und einen Abschnitt eines Kabelmantels (38) enthält, wobei die zumindest eine Zugentlastungskomponente (34A, 34B) am Endabschnitt (42) zum Teil freiliegt, sodass ein Abschnitt der Zugentlastungskomponente (34A, 34B) aufgedeckt wird, während ein übriger Abschnitt der Zugentlastungskomponente (34A, 34B) entlang einer ähnlichen Längsstelle am Kabelmantel (38) angebracht bleibt, wobei ein Abschnitt der Zugentlastungskomponente (34A, 34B) aufgedeckt wird, indem bewirkt wird, dass ein Abschnitt des Kabelmantels (38) auf gegenüberliegenden Seiten des Endabschnitts (42) neben der vorderen Fläche (52) und entlang der Längsachsen der Zugentlastungskomponenten (34A, 34B) entfernt wird, wodurch ein oder mehrere zum Teil freiliegende Abschnitte (46A, 46B) der Zugentlastungskomponenten (34A, 34B) gebildet werden; wobei die Anordnung eines faseroptischen Kabels **dadurch gekennzeichnet ist, dass** ein Abschnitt der Zugentlastungskomponenten auf gegenüberliegenden Seiten des Endabschnitts neben der vorderen Fläche und entlang der Längsachsen der Zugentlastungskomponenten entfernt wird, wodurch ein oder mehrere zum Teil freiliegende Abschnitte der Zugentlastungskomponenten gebildet werden, und dadurch, dass die Anordnung eines faseroptischen Kabels Folgendes aufweist:
einen Haltekörper (60, 60', 160, 360) mit einem sich dort hindurch erstreckenden Haltekörperdurchgang (91, 91', 191), wobei der Endabschnitt des faseroptischen Kabels innerhalb des Haltekörperdurchgangs (91, 91', 191) angeordnet und am Haltekörper (60, 60', 160, 360) befestigt ist.

2. Anordnung eines faseroptischen Kabels nach Anspruch 1, die ferner ein Bindemittel zum Befestigen des Endabschnitts des faseroptischen Kabels (30, 130, 230, 330) am Haltekörper (60, 60', 160, 360) enthält.

3. Anordnung eines faseroptischen Kabels nach Anspruch 1 oder 2, die ferner eine Unteranordnung (62) eines faseroptischen Verbinders enthält.

4. Anordnung eines faseroptischen Kabels nach den Ansprüchen 1-3, die ferner eine zwischen einer Innenfläche des Haltekörpers (60, 60', 160, 360) und dem Endabschnitt des faseroptischen Kabels (30, 130, 230, 330) gebildete Bindemittelkammer (94A, 94B) aufweist, wobei das Kabel ein Flachkabel ist, in dem in einer der Außenmantelflächen eine Ausnehmung hergestellt ist, sodass, wenn das faseroptische Kabel in den Haltekörperdurchgang (91, 91', 191) eingeführt wird, eine Querstromkammer in der Bindemittelkammer (94A, 94B) zwischen den Ausnehmungsflächen und der Innendurchgangsfläche gebildet wird.

5. Anordnung eines faseroptischen Kabels nach Anspruch 4, die ferner eine Unteranordnung (62) eines faseroptischen Verbinders und ein Steckergehäuse (84) enthält, wobei die Unteranordnung (62) eines faseroptischen Verbinders am Haltekörper (60, 60', 160, 360) angebracht ist und der Haltekörper (60, 60', 160, 360) sich zumindest zum Teil innerhalb des Steckergehäuses (84) befindet.

6. Anordnung eines faseroptischen Kabels nach den Ansprüchen 1-5, wobei der Haltekörper ein Abschnitt eines faseroptischen Verbinders ist.

7. Verfahren zum Konfektionieren einer Anordnung eines faseroptischen Kabels, das folgende Schritte aufweist:
Bereitstellen eines faseroptischen Kabels (30, 130, 230, 330) mit zumindest einer Lichtleiterfaser, zumindest einer Zugentlastungskomponente (34A, 34B) und einem Kabelmantel (38);
Freilegen eines Abschnitts der zumindest einen Lichtleiterfaser an einem Endabschnitt (42) des faseroptischen Kabels;
Entfernen eines Abschnitts des Kabelmantels (38), wodurch ein zum Teil freiliegender Abschnitt der zumindest einen Zugentlastungskomponente (34A, 34B) am Endabschnitt (42) des faseroptischen Kabels (30, 130, 230, 330) erzeugt wird, sodass ein Abschnitt der Zugentlastungskomponente (34A, 34B) aufgedeckt wird, während ein übriger Abschnitt der Zugentlastungskomponente (34A, 34B) entlang einer ähnlichen Längsstelle am Kabelmantel (38) angebracht bleibt, wobei ein Abschnitt der Zugentlastungskomponente (34A, 34B) aufgedeckt wird, indem bewirkt wird, dass ein Abschnitt des Kabelmantels (38) auf gegenüberliegenden Seiten des Endabschnitts (42) neben der vorderen Fläche (52) und entlang der Längsachsen der Zugentlastungskomponenten (34A, 34B) entfernt wird, wodurch ein oder mehrere zum Teil freiliegende Abschnitte (46A, 46B) der Zugentlastungskomponenten (34A, 34B) gebildet werden;
wobei das Verfahren **dadurch gekennzeichnet ist, dass** ein Abschnitt der Zugentlastungskomponenten aufgedeckt wird, indem bewirkt wird, dass ein Abschnitt der Zugentlastungskomponenten auf gegenüberliegenden Seiten des Endabschnitts neben der vorderen Fläche und entlang der Längsachsen der Zugentlastungskomponenten entfernt wird, wodurch ein oder mehrere zum Teil freiliegende Abschnitte von Zugentlastungskomponenten gebildet werden, und dadurch, dass der Endabschnitt (42) des faseroptischen Kabels (30, 130, 230, 330) in einen durch einen Haltekörper (60, 60', 160, 360) definierten Haltekörperdurchgang eingeführt wird, sodass sich die zumindest eine Lichtleiterfaser zu einer durch den Haltekörper (60, 60', 160, 360) definierten vorderen Öffnung hin erstreckt; und der Endabschnitt des faseroptischen Kabels (30, 130, 230, 330) am Haltekörper (60, 60', 160, 360) befestigt wird.

8. Verfahren nach Anspruch 7, wobei der Schritt des Befestigens ferner Einspritzen eines Bindemittels in den Haltekörper (60, 60', 160, 360) und Aushärten des Bindemittels enthält.

9. Verfahren nach Anspruch 7, das ferner den Schritt des Bildens einer Querstromkammer zwischen dem Haltekörper (60, 60', 160, 360) und dem faseroptischen Kabel (30, 130, 230, 330) aufweist.

10. Verfahren nach Anspruch 7, das ferner folgende Schritte aufweist: Anbringen einer Verbinderunteranordnung am Haltekörper (60, 60', 160, 360); Positionieren eines Abschnitts des Haltekörpers (60, 60', 160, 360) innerhalb eines Steckergehäuses; und Bereitstellen einer Überwurfmutter.

## Revendications

1. Ensemble câble à fibre optique, comprenant :
un câble à fibre optique (30, 130, 230, 330) pourvu d'une partie extrémité (42), la partie extrémité (42) comportant au moins une partie d'un composant porteur (34A, 34B) et une partie d'une gaine (38) de câble, l'au moins un composant porteur (34A, 34B) étant partiellement découverte au niveau de la partie extrémité (42) de sorte qu'une partie du composant porteur (34A, 34B) soit apparente tandis qu'une partie restante du composant porteur (34A, 34B) le long d'un endroit longitudinal similaire reste attachée à la gaine (38) de câble, une partie du composant porteur (34A, 34B) étant rendue apparente par retrait d'une partie de la gaine (38) de câble de côtés opposés de la partie extrémité (42) adjacents à la surface frontale (52) et le long des axes longitudinaux de composants porteurs (34A, 34B), pour ainsi former une ou plusieurs parties partiellement découvertes (46A, 46B) de composants porteurs (34A, 34B) ; l'ensemble câble à fibre optique étant **caractérisé en ce qu'**une partie des composants porteurs est retirée de côtés opposés de la partie extrémité adjacents à la surface frontale et le long des axes longitudinaux des composants porteurs, pour ainsi former une ou plusieurs parties partiellement découvertes de composants porteurs, et **en ce que** l'ensemble câble à fibre optique comprend
un corps de retenue (60, 60', 160, 360) au travers duquel s'étend un passage (91, 91', 191) de corps de retenue, la partie extrémité du câble à fibre optique étant placée à l'intérieur du passage (91, 91', 191) de corps de retenue et fixée au corps de retenue (60, 60', 160, 360).

2. Ensemble câble à fibre optique selon la revendication 1, comportant en outre un agent de liaison destiné à fixer la partie extrémité du câble à fibre optique (30, 130, 230, 330) au corps de retenue (60, 60', 160, 360) .

3. Ensemble câble à fibre optique selon la revendication 1 ou 2, comportant en outre un sous-ensemble connecteur (62) pour fibre optique.

4. Ensemble câble à fibre optique selon les revendications 1 à 3, comprenant en outre une chambre de liaison (94A, 94B) formée entre une surface intérieure du corps de retenue (60, 60', 160, 360) et la partie extrémité du câble à fibre optique (30, 130, 230, 330), le câble étant un câble plat où un renfoncement est ménagé dans l'une des surfaces extérieures de la gaine de sorte que, lorsque le câble à fibre optique est introduit dans le passage (91, 91', 191) de corps de retenue, une chambre d'écoulement transversal soit formée dans la chambre de liaison (94A, 94B) entre les surfaces du renfoncement et la surface intérieure du passage.

5. Ensemble câble à fibre optique selon la revendication 4, comportant en outre un sous-ensemble connecteur (62) pour fibre optique et un boîtier à enficher (84), le sous-ensemble connecteur (62) pour fibre optique étant attaché au corps de retenue (60, 60', 160, 360) et le corps de retenue (60, 60', 160, 360) étant au moins partiellement placé à l'intérieur du boîtier à enficher (84).

6. Ensemble câble à fibre optique selon les revendications 1 à 5, dans lequel le corps de retenue est une partie d'un connecteur pour fibre optique.

7. Procédé d'assemblage d'un ensemble câble à fibre optique, comprenant les étapes suivantes :
fourniture d'un câble à fibre optique (30, 130, 230, 330) pourvu d'au moins une fibre optique, d'au moins un composant porteur (34A, 34B) et d'une gaine (38) de câble ;
mise à découvert d'une partie de l'au moins une fibre optique au niveau d'une partie extrémité (42) du câble à fibre optique ;
retrait d'une partie de la gaine (38) de câble, pour ainsi créer une partie partiellement découverte de l'au moins un composant porteur (34A, 34B) au niveau de la partie extrémité (42) du câble à fibre optique (30, 130, 230, 330) de sorte qu'une partie du composant porteur (34A, 34B) soit apparente tandis qu'une partie restante du composant porteur (34A, 34B) le long d'un endroit longitudinal similaire reste attachée à la gaine (38) de câble, une partie du composant porteur (34A, 34B) étant rendue apparente par retrait d'une partie de la gaine (38) de câble de côtés opposés de la partie extrémité (42) adjacents à la surface frontale (52) et le long des axes longitudinaux de composants porteurs (34A, 34B), pour ainsi former une ou plusieurs parties partiellement découvertes (46A, 46B) de composants porteurs (34A, 34B) ;
le procédé étant **caractérisé en ce qu'**une partie des composants porteurs est rendue apparente par retrait d'une partie des composants porteurs de côtés opposés de la partie extrémité adjacents à la surface frontale et le long des axes longitudinaux de composants porteurs, pour ainsi former une ou plusieurs parties partiellement découvertes de composants porteurs, et **en ce que** la partie extrémité (42) du câble à fibre optique (30, 130, 230, 330) est insérée dans un passage de corps de retenue défini par un corps de retenue (60, 60', 160, 360) si bien que l'au moins une fibre optique s'étend jusqu'à une ouverture frontale définie par le corps de retenue (60, 60', 160, 360) ; et
la partie extrémité du câble à fibre optique (30, 130, 230, 330) est fixée au corps de retenue (60, 60', 160, 360).

8. Procédé selon la revendication 7, l'étape de fixation comportant en outre l'injection d'un agent de liaison dans le corps de retenue (60, 60', 160, 360) et le durcissement de l'agent de liaison.

9. Procédé selon la revendication 7, comprenant en outre l'étape de formation d'une chambre d'écoulement transversal entre le corps de retenue (60, 60', 160, 360) et le câble à fibre optique (30, 130, 230, 330).

10. Procédé selon la revendication 7, comprenant en outre les étapes d'attache d'un sous-ensemble connecteur au corps de retenue (60, 60', 160, 360) ; de positionnement d'une partie du corps de retenue (60, 60', 160, 360) à l'intérieur d'un boîtier à enficher ; et de fourniture d'un écrou de raccord.
